# EUROPEAN PATENT APPLICATION

(11) **EP 4 734 519 A1**
(43) Date of publication of application: **29.04.2026**
(21) Application number: 24315499.4
(22) Date of filing: 28.10.2024
(51) Int. Cl.: H04N 19/70, H04N 21/23, H04N 21/43, H04N 21/854, H04N 21/236

(54) **METHOD AND APPARATUS FOR INCLUDING/REMOVING METADATA IN/FROM A MEDIA BITSTREAM, AND ENCODER/DECODER INCLUDING THE SAME**

(71) Applicant: Beijing Xiaomi Mobile Software Co., Ltd., Beijing Beijing 100085 (CN)
(72) Inventor: THOMAS, Emmanuel, Beijing, 100085 (CN); POTETSIANAKIS, Emmanouil, Beijing, 100085 (CN); ALEXIOU, Evangelos, Beijing, 100085 (CN)
(74) Representative: König, Andreas Rudolf

(57) **Abstract**

The present invention provides a method of inserting metadata into a bitstream, the method comprising:
obtaining media data associated with a media bitstream comprising the media bitstream data structure;
generating a metadata data structure to be inserted in the media bitstream data structure;
determining an insertion position in the obtained media bitstream as a position to insert the metadata data structure;
inserting the metadata data structure at the determined position in the media bitstream.

## Description

### Technical Field

The present disclosure generally relates to the field of encoding/decoding media data such as audio streams or video streams, and embodiments of the present disclosure concern the generation and insertion of metadata into a media bitstream as well as removal thereof, e.g., at a consuming device.

### Background

A video bitstream is a data stream resulting from the compression of an uncompressed video sequence. The video bitstream is thus the output of a video encoder and it can be fed as input of a video decoder to reconstruct the encoded video. A media file, such as based on the ISOBMFF standard (e.g..mp4 files) or its derivative, Matroska, MPEG-2 PS and the like, is a file container for storing a video bitstream into a file, possibly together with other synchronised bitstreams such as audio or even subtitles.

Since MPEG-4 part 10 / Advanced Video Coding (AVC), the series of video coding standards jointly developped by MPEG and ITU adopt the concept of Network Abstraction Layer (NAL) units as the high-level data structure of a video bitstream. That is, a video bitstream conforming to AVC, HEVC, EVC or VVC is a sequence of NAL units.

For transporting video data, it is sometimes of advantage to incorporate metadata into the bitstream, especially when the metadata is generated on a per-frame basis. However, every codec may have a different metadata container which requires processes and devices to insert and extract such metadata into a metadata container that is codec-specific. Further, it may be optional to incorporate the metadata or parts thereof such that the structure of the bitstream may be at least in parts unknown at the decoder side. This means that a filtering process prior to decoding the video needs to be able to detect the presence of such metadata in a deterministic way. In some cases, the metadata is intended to be used in the rendering process. In other cases, the metadata is intended for the application and thus should not be forwarded to the rendering pipelines. Those ambiguities are leading to deficiencies when considering existing metadata transport in bitstream. Therefore, there is the need for an improved approach.

### Summary

Embodiments relate to generating a metadata data structure, e.g., a metadata container, and to determining a position for insertion of the metadata data structure in a media bitstream and to insert the metadata data structure at the determined position which allows to overcome the above identified deficiencies as the structure as well as the position allow for degrees of freedom.

An embodiment provides a method of inserting a metadata data structure into a media bitstream, the method comprising:
obtaining the media bitstream;
generating a metadata data structure to be inserted in the media bitstream ;
determining an insertion position in the media bitstream as a position to insert the metadata data structure;

inserting the metadata data structure at the determined position in the media bitstream.

An embodiment provides the method, wherein media bitstream is a bitstream according to a discrete time structure unit of a coding scheme; wherein the metadata data structure is generated to comprise a sequence of bits to differentiate the metadata data structure from data units of the coding scheme.

An embodiment provides the method, further comprising:
generating a payload of the metadata data structure,
wherein inserting the metadata data structure at the determined position in the media bitstream comprises to insert the metadata data structure comprising the payload of the metadata data structure.

An embodiment provides the method, wherein the media bitstream comprises a succession of access units, AUs, or temporal units.

An embodiment provides the method, wherein the metadata data structure is generated according to a Network Abstraction Layer unit, NAL unit, compatible with a target media standard for logical insertion into an access unit, AU, thereof.

An embodiment provides the method, wherein the media bitstream is a Network Abstraction Layer unit, NAL unit, based video bitstream.

An embodiment provides the method, wherein the metadata data structure is generated to comprise a header and such that a foremost bit of the header is set to one.

An embodiment provides the method, wherein the header is generated to comprise as the starting first byte a byte corresponding to an unused start code of an MPEG-2 video codec whose first bit is set to one.

An embodiment provides the method, wherein the media bitstream is an Open Bitstream Unit, OBU, based video bitstream.

An embodiment provides a method of extracting metadata from a first media bitstream, the method comprising:
obtaining the first media bitstream;
parsing a plurality of data units of the media bitstream comprising a metadata data structure;
determining, for each parsed data unit of the plurality of data units, whether the parsed data unit comprises or is a metadata data unit of the metadata data structure or is a data unit having a different data structure according to a media coding scheme of the media bitstream;
removing the parsed metadata data unit from the first media bitstream if the parsed data unit comprises or is a metadata data unit to obtain a second media bitstream.

An embodiment provides a non-transitory computer-readable storage medium comprising instructions which, when executed by a computer, cause the computer to carry out the method of any one of the preceding claims.

An embodiment provides the an encoding unit, comprising:
an interface obtaining a media bitstream;
a metadata generator for generating a metadata data structure to be inserted in the media bitstream;
a metadata injector for determining an insertion position in the obtained media bitstream as a position to insert the metadata data structure;
wherein the a metadata injector is adapted for inserting the metadata data structure at the determined position in the media bitstream.

An embodiment provides a decoding unit, comprising:
an interface for obtaining a media bitstream comprising a metadata data structure;
a depacketizer configured for parsing a plurality of data units of the media bitstream;
a metadata extractor configured for determining, for each parsed data unit of the plurality of data units, whether the parsed data unit comprises or is a metadata data unit of the metadata data structure or a data unit having a different data structure according to a media coding scheme of the media bitstream;
wherein the metadata extractor is configured for removing the parsed metadata unit from the first media bitstream if the parsed data unit comprises or is a metadata data unit to obtain a second media bitstream.

An embodiment provides a data stream comprising a bitstream generated with a method according to an embodiment.

An embodiment provides a non-transitory computer-readable storage medium comprising a media file generated with a method according to an embodiment.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: illustrates an example of AVC NAL unit syntax;
- Fig. 2: illustrates an example of VVC NAL unit syntax;
- Fig. 3: illustrates an example of VVC NAL unit type codes and NAL unit type classes;
- Fig. 4: illustrates an example of AV1 OBU syntax;
- Fig. 5: illustrates an example of an OBU header syntax block diagram of MPEG-4 part 1's flow diagram for the systems decoder model;
- Fig. 6: illustrates an example of PES packets related to the MPEG-2 System standard;;
- Fig. 7: shows a table illustrating permitted value of parameter the stream_id;
- Fig. 8: shows a range of start codes values in MPEG-2 specification;;
- Fig. 9: shows the SEI message syntax definition of VVC;
- Fig. 10: illustrates a first part of code points and their associated metadata, i.e., the beginning of the list of SEI payload code points in VVC;
- Fig. 11: illustrates a first part of code points and their associated metadata, i.e., the beginning of the list of SEI payload code points in AVC;
- Fig. 12: illustrates syntax of Metadata OBU in AV1;;
- Fig. 13: illustrates a schematic block diagram of the file based application scenario according to a disclosure
- Fig. 14a: illustrates a a schematic block diagram of a network packet based application scenario according to a disclosure;
- Fig. 14b: illustrates a schematic flow chart of a method for inserting metadata into a bitstream according to a disclosure;
- Fig. 14c: illustrates a schematic flow chart of a method for removing metadata from a bitstream according to a disclosure;
- Fig. 15: illustrates three access units in a VVC bitstream containing each comprising or formed by one NAL unit 1511, 1512, 1513.;
- Fig. 16: illustrates proposed new metadata data structure according a disclosure;
- Fig. 17: illustrates a metadata NAL unit with first bit being set to one
- Fig. 18: illustrates a small refinement of the structure of Fig. 17 according a disclosure;
- Fig. 19: illustrates a modified header of metadata NAL unit according a disclosure;
- Fig. 20: illustrates a schematic flow chart of a parsing logic of the application-level metadata in NAL unit-based video bitstream according a disclosure;
- Fig. 21: illustrates an example of Application Metadata OBU in AV1 bitstream according a disclosure;
- Fig. 22: illustrates application Metadata OBU with first bit set to one according a disclosure;
- Fig. 23: illustrates shows application Metadata OBU starting with an unused MPEG-2 video start code according a disclosure;
- Fig. 24: illustrates shows a possible parsing logic of the application-level metadata in OBU-based video bitstream according a disclosure;
- Fig. 25: illustrates shows an example of an Application Metadata Unit for both NAL and OBU video bitstreams according a disclosure;
- Fig. 26: illustrates a modified AMU that comprises a modified header according a disclosure;
- Fig. 27: illustrates a modified that comprises a modified header to provide for an Application Metadata Unit starting with an extension flag for optional fields according a disclosure;
- Fig. 28: illustrates a block diagram illustrating an electronic device according a disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

Before discussing the disclosure the background and the prior art will be discussed so as to describe the problem to be solved.

Some embodiments described herein relate to video bitstreams associated with one or more video codecs as an example of media bitstreams. Some embodiments are described in connection with the VVC standard for the background since it is being the latest video coding standard from the MPEG/ITU collaboration, and it is therefore used for primarily illustrating the embodiments. However, the invention is not limited to VVC but can be applied to any video coding standards. Further, beside video bitstreams, similar approaches can be applied to non-video codecs, e.g. audio or other media, which use a discrete time structure unit similar to NAL or OBU units and for which a certain bit or byte sequence could be used to differentiate them from existing data units of that codec.

### Based on NAL unit

Since MPEG-4 part 10 / Advanced Video Coding (AVC), the series of video coding standards jointly developped by MPEG and ITU adopt the concept of Network Abstraction Layer (NAL) units as the high-level data structure of a video bitstream. That is, a video bitstream conforming to AVC, HEVC, EVC or VVC is a sequence of NAL units. For each standard, a NAL unit syntax is defined and it may be composed of a header followed by a payload. The header has typically the same syntax within a given standard. However, the syntax and size of the header may vary from one standard to another.

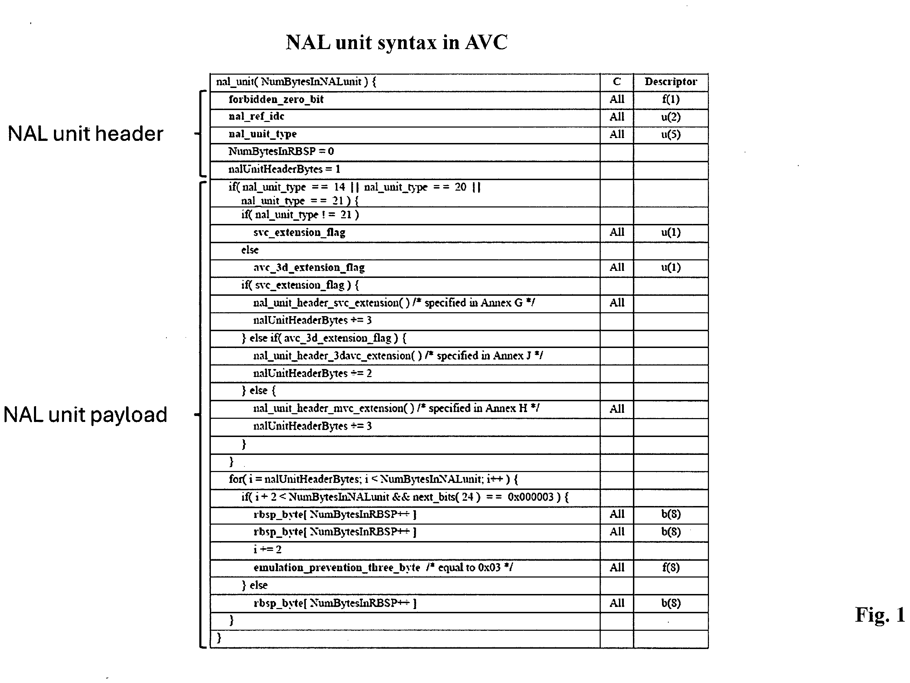

For example, Fig. 1 represents the syntax of the AVC NAL unit. For each standard, a NAL unit is composed of a header followed by a payload. The header has typically the same length for a given standard. However, the syntax and size of the header may vary from one standard to another.

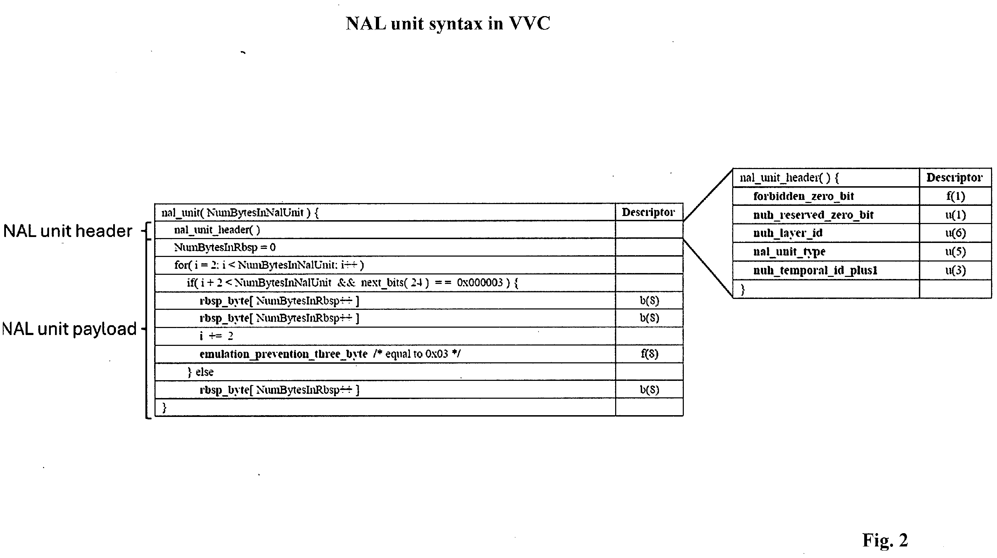

Another example is from the VVC standard as shown in Fig. 2 that shows exemplarily a VVC NAL unit syntax.

Fig. 1 and 2 the NAL unit header and the NAL unit payload is indicated. As can be seen with respect to Fig. 2, the NAL unit header of the VVC NAL unit syntax comprises more content than just shown in Fig. 1, i.e. in the AVC NAL unit header.

What is common to all the NAL unit headers across the different video coding standards is that:
- The header does not contain the total size of the NAL unit;
- The header contains a syntax element to signal the type of NAL unit which determine how to parse the payload of this NAL unit.

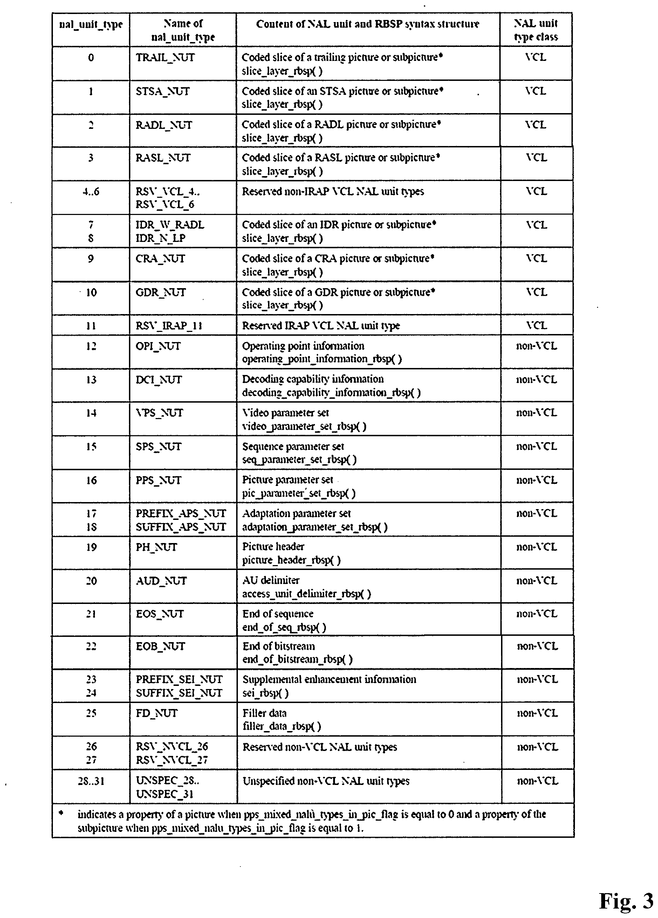

For example, Fig. 3 shows the list of NAL unit types for the VVC standard, in particular VVC NAL unit type codes and NAL unit type classes and the respective content.

One of the characteristics of the NAL unit headers across AVC, HEVC, EVC and VVC is the presence of the first bit element syntax "forbidden_zero_bit" which is always of value equal to 0, e.g. as specified in VVC in clause 7.4.2.2:
**forbidden_zero_bit** shall be equal to 0.

### Based on Open Bitstream Unit (OBU) in AV1

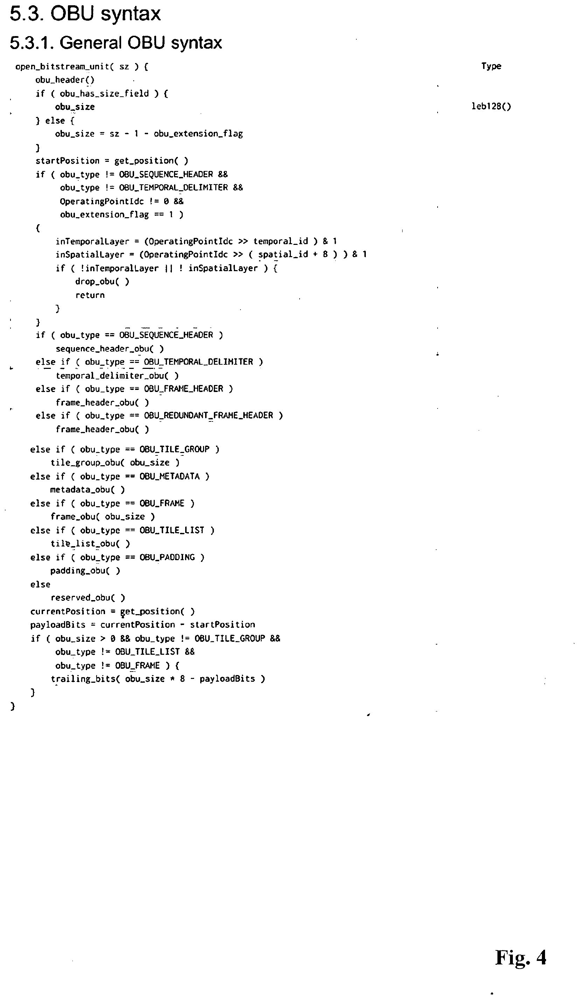

In a similar fashion as for NALU, the AV1 specification defines an AV1 bitstream as a sequence of OBUs. An OBU is specified in clause 5.3 represented in Fig. 4 showing the OBU syntax in AV1 according zo [4].

In essence, it is very similar to the NAL unit concept:
- An OBU header has a obu_type to determine the type of the current OBU
- As opposed to a NAL unit, an OBU can contain its size which is signalled in the field called obu_size. The presence of the obu_size field is conditioned to the Boolean syntax obu_has_size_field in the header.

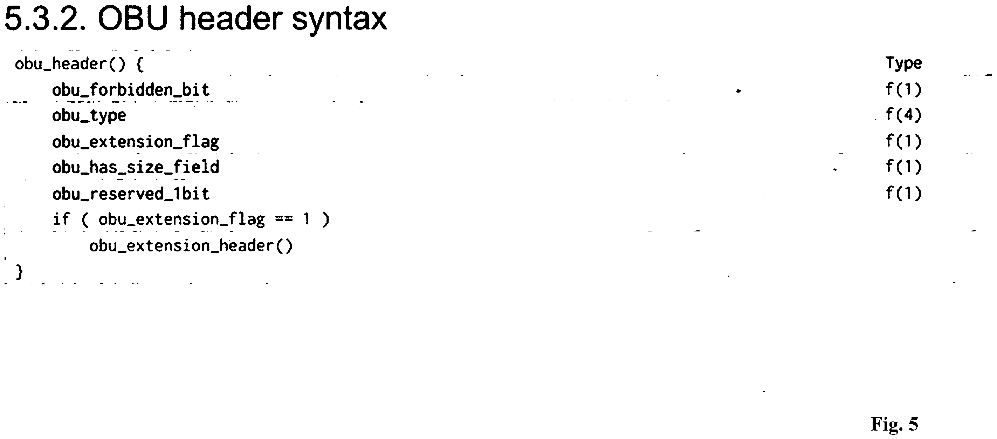

The first element of an OBU is the OBU header which is defined in clause 5.3.2 and represented in Fig. 5 showing the OBU header syntax in AV1.

### Motivation for the forbidden zero bit in NAL and OBU header

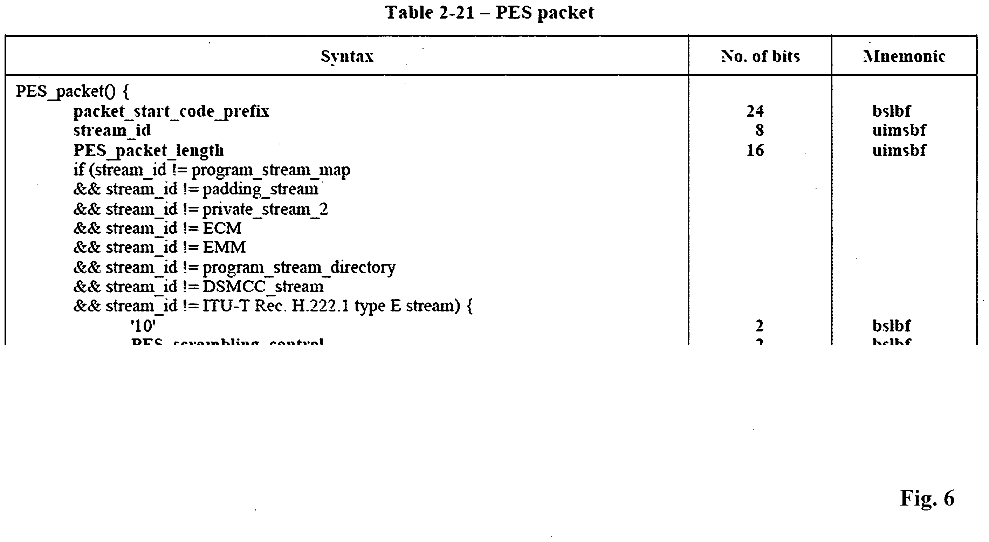

One reason behind this 0 bit is to prevent the occurrence of a specific bit sequence defined in the MPEG-2 Systems standard [3]. Indeed, NAL units can be encapsulated into the Packetized Elementary Stream packets, PES packets, defined in the MPEG-2 System standard. Those PES packets have a 24-bit start code as illustrated in Fig. 6 which gives the beginning of the syntax of a PES packet.

This start code is defined as follows in clause 2.4.3.7 Semantic definition of fields in PES packet:
**packet start code_prefix** - The packet start code_prefix is a 24-bit code. Together with the stream_id that follows it constitutes a packet start code that identifies the beginning of a packet. The packet start code_prefix is the bit string '0000 0000 0000 0000 0000 0001' (0x000001).

This is followed by the definition of the syntax element stream_id:
**stream_id** - In program streams, the stream_id specifies the type and number of the elementary stream as defined by the stream_id Table 2-22. In transport streams, the stream_id may be set to any valid value which correctly describes the elementary stream type as defined in Table 2-22. In transport streams, the elementary stream type is specified in the program-specific information as specified in 2.4.4. For AVC video streams conforming to one or more profiles defined in Annex G of Rec. ITU-T H.264 | ISO/IEC 14496-10, all video sub-bitstreams of the same AVC video stream shall have the same stream_id value. For AVC video streams conforming to one or more profiles defined in Annex H of Rec. ITUT H.264 | ISO/IEC 14496-10, all MVC video sub-bitstreams of the same AVC video stream shall have the same stream_id value. For AVC video streams conforming to one or more profiles defined in Annex I of Rec. ITU-T H.264 | ISO/IEC 14496-10, all MVCD video sub-bitstreams of the same AVC video stream shall have the same stream_id value.

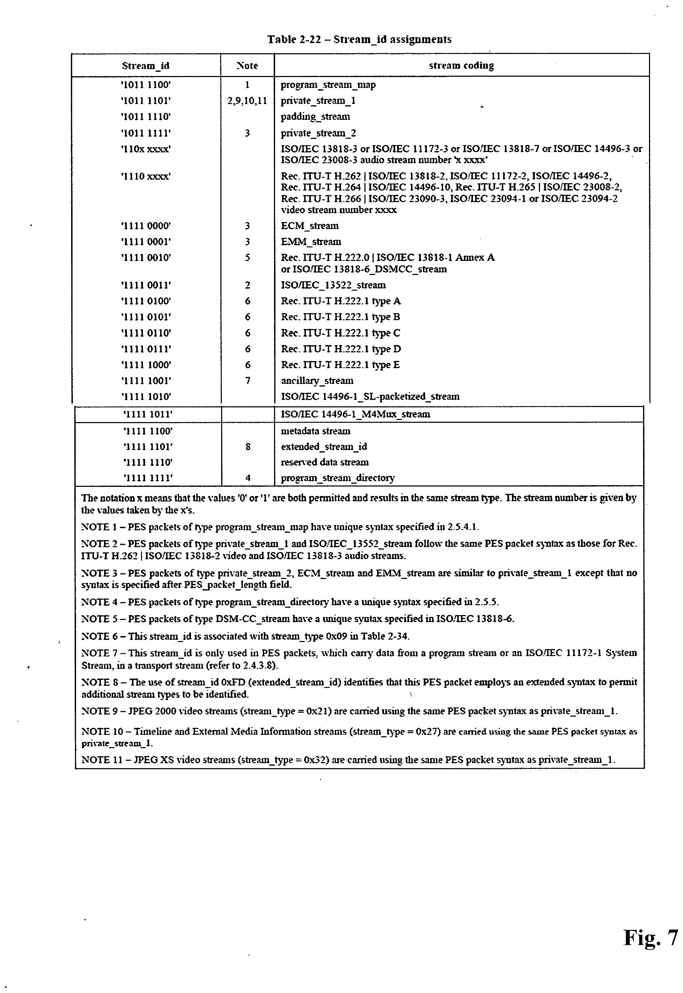

As mentioned above, the stream_id can only take the values defined in the table represented in Fig. 7 illustrating the stream_id permitted values. As observed in the table shown in Fig. 7, the first bit of a stream_id value is always "1". As a result, the sequence of bits '0000 0000 0000 0000 0000 0001 1........' indicates that this is the start of a PES packet while '0000 0000 0000 0000 0000 0001 0........' Indicates this is the start of a NAL unit in the context of NAL units (or OBU) encapsulated into PES packets.

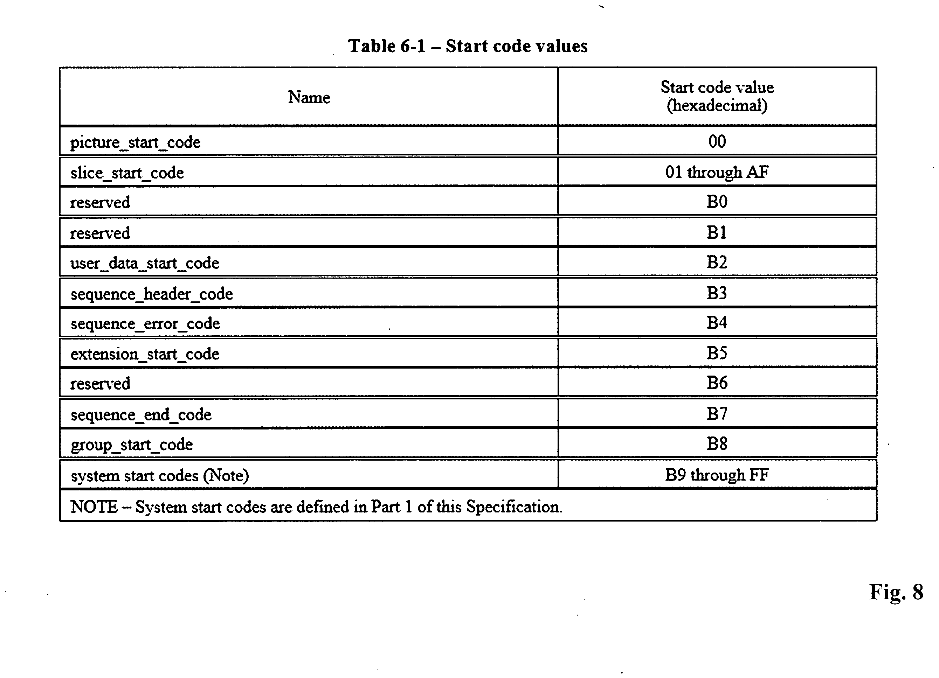

For completeness, the range of stream_id values in the MPEG-2 Systems standard were defined together with the MPEG-2 Video standard [4], ISO/IEC 13818-2. In this standard, the following table, as illustrated in Fig. 8, describes all the possible start codes both from the MPEG-2 Video and MPEG-2 Systems sides showing a range of start codes values in MPEG-2 specification.

### Description of the prior art

Below, the prior art will be discussed.

The prior art described in this section is the SEI messages for NAL based video bitstreams (AVC, HEVC, EVC and VVC) and the OBU metadata for OBU-based video bitstreams (AV1).

In each of those video coding standards, one can:
- Register a new type of metadata payload for a given video coding standard.
- Store this new type of metadata payload in the metadata container (SEI message or metadata OBU) of the corresponding video coding standard.
- Insert this metadata container in the video bitstream compliant to the video coding standard.
- This video bitstream with the metadata may be further stored into files or transmitted over the network.

### SEI message in NAL-based video bitstreams

In order to carry metadata, each video coding standard typically defines a list of metadata that can be carried as well as a container to carry this metadata.

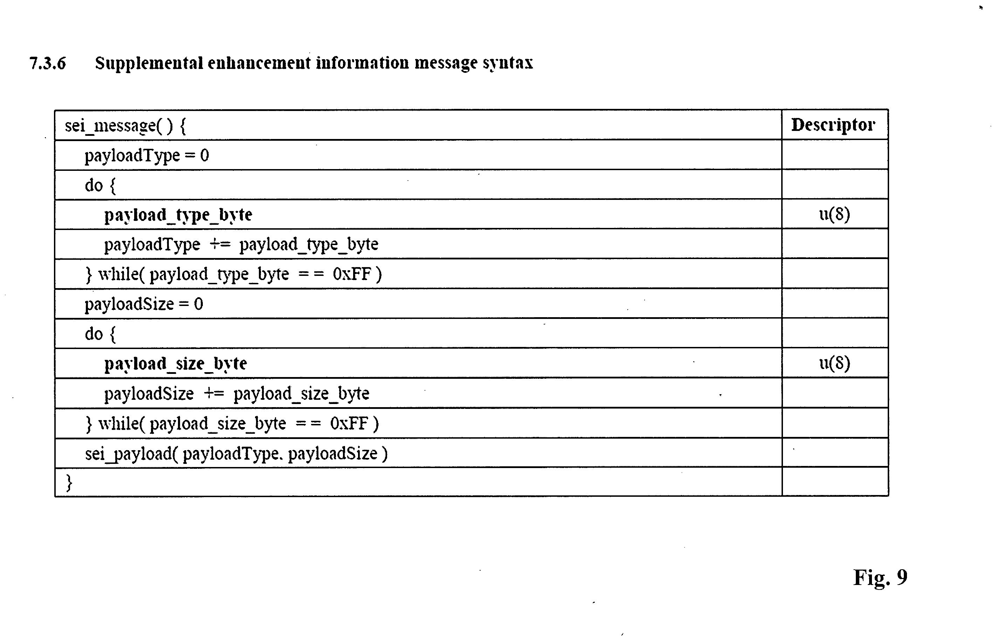

In the NAL-based family of video coding standards, the so-called supplemental enhancement information (SEI) messages are defined. Fig. 9 shows the SEI message syntax definition of VVC which is similar to the other NAL-based video coding standards.

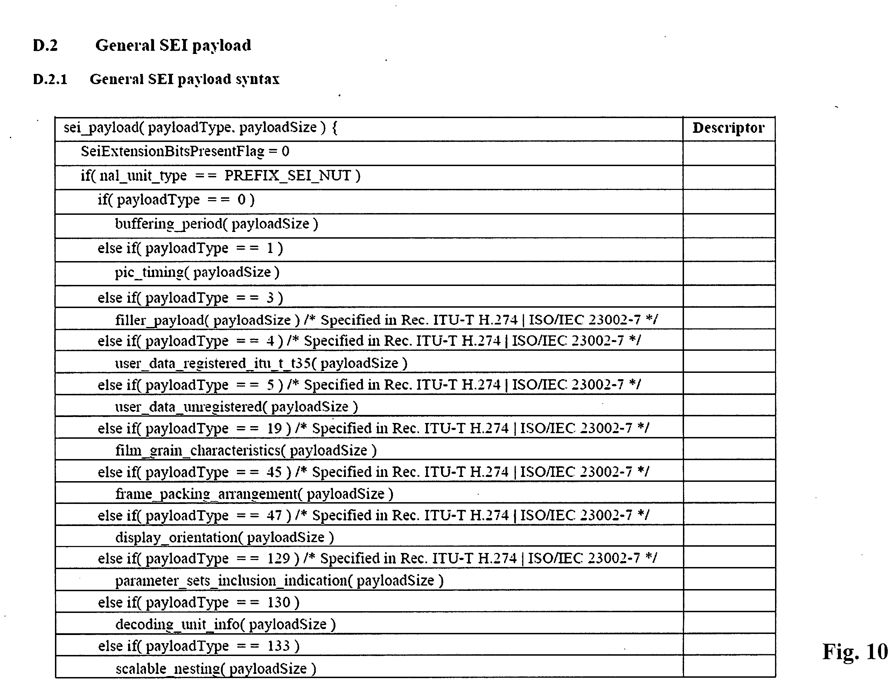

Each standards defines a list of code points to identify the payload type carried in the metadata container. Although the payload may be the same, the code points can differ since they are specific to each standard. For VVC, Fig. 10 gives only the first part of code points and their associated metadata, i.e., the beginning of the list of SEI payload code points in VVC.

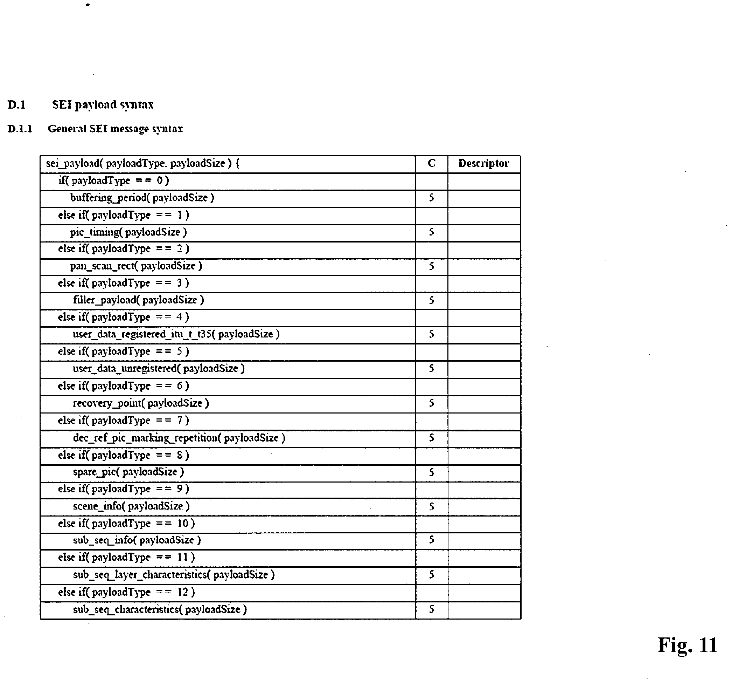

For AVC, Fig. 11 gives only the first part of code points and their associated metadata, i.e., the beginning of the list of SEI payload code points in AVC.

### The OBU metadata in AVI

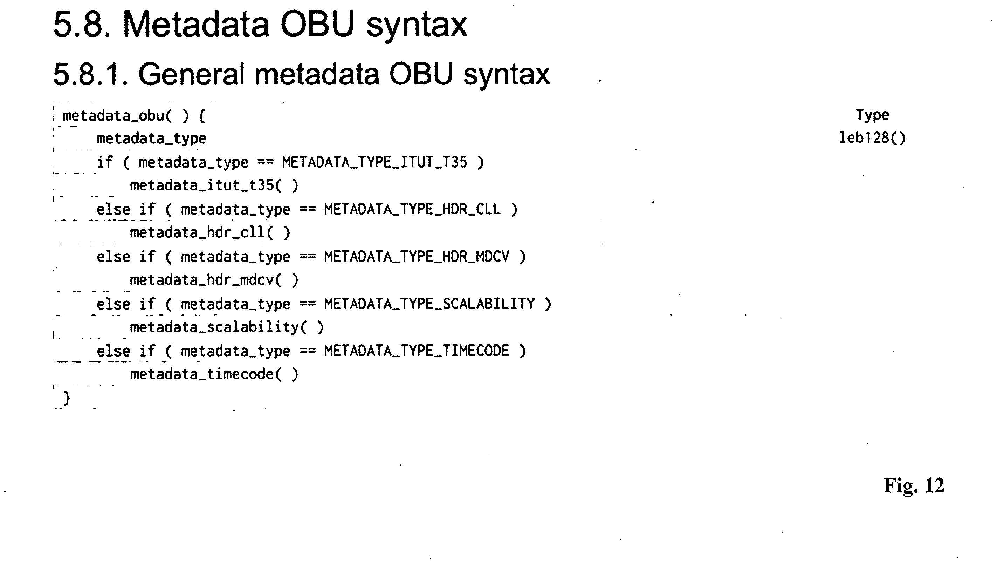

In AV1, the standard defines a type of OBU being of metadata type as illustrated in Fig. 12 showing Metadata OBU in AV1.

### Disadvantages of Prior art

Using SEI messages or metadata OBU have the following disadvantages:
- Each codec may have a different metadata container:
   ∘ OBU metadata has a different syntax than SEI messages (NAL).
   ∘ Even in the NAL family, NAL units have different syntax between video coding standards, e.g. AVC NAL unit header is 1 byte while HEVC and VVC NAL unit header are two-byte long.
   ∘ Therefore, one cannot use an SEI message from AVC in a VVC bitstream for instance.
- When the same metadata payload is standardized in different video coding standards as SEI messages (for NAL-unit based), the same metadata needs to be registered in each standard and thus they can have different code points. There is no guarantee that registered code points will be always aligned for the same payload.
- SEI messages are by definition not required for the decoding the video bitstream but can be required for properly rendering/transforming the decoded video.

Therefore, an SEI message cannot be for sure considered to be metadata for the application level and be safely removed. Removing an SEI from a video bitstream may thus have a detrimental effect to the user experience by breaking the rendering process of the decoded video.
- A system creating the metadata carried in a SEI message has to be codec-aware and thus cannot work with any coding standards even from the NAL-based family. Similarly, a system parsing the metadata from an SEI message from a video bitstream has to be coded-specific since this SEI message would following the syntax of the SEI message of a particular video coding standard.

### Detailed introduction of the technical disclosure - Application scenario

The application scenario can be represented in two variants. The first one is when the video bitstream is stored into a file. The second one is when the video bitstream is packetized in order to be sent over a network according to a given network protocol. Below, different application scenarios for the subject-matter of the technical disclosure will be discussed.

### Scenario: File-based application scenario

In this scenario, it is to be noted that:
- Both the device generating and consuming the video files can be an end user device (mobile device, laptop, smartwatch, et...), a network element (edge serve, cloud server, intermediate element such as Media-Aware Network Element (MANE)).
- The full set of functions, e.g. metadata injector, of each system (generating and consuming) can be partly executed on a device and the rest on another device. For instance, the metadata injector can be executed on a server while the encoding is done on a local device.
- The device generating the video file and consuming the video file can be the same device.
- The file storage may be on the same device or located on the network in which, case the video file is uploaded to and downloaded from the network, but this is transparent for the scenario since the file remains bit-identical.
- The video encoder and the metadata injector can operate at the same time or at different point in time, which is the entire video bitstream can be generated up front and then the metadata is injected.
- When the video bitstream has been encoded before, the video bitstream may have already been stored into a video file. In this case, the metadata injector may directly inject the metadata into the video file containing the video bitstream and not in the video bitstream avoiding the extraction of the video bitstream and then its re-encapsulation.
- In its most simple form, the video file is a form of the video bitstream that is made parsable, i.e. with start codes to identify the start of the bitstream units (e.g. NAL or OBU). This form is defined in Annex B of the corresponding standards, AVC, HEVC, EVC, VVC and AV1.
- In the typical case, the video file is based on a media container format such as ISOBMFF or its derivative, Matroska, MPEG-2 PS, etc.
- The application in the generating system and the one in the consuming system may be the same or be different.

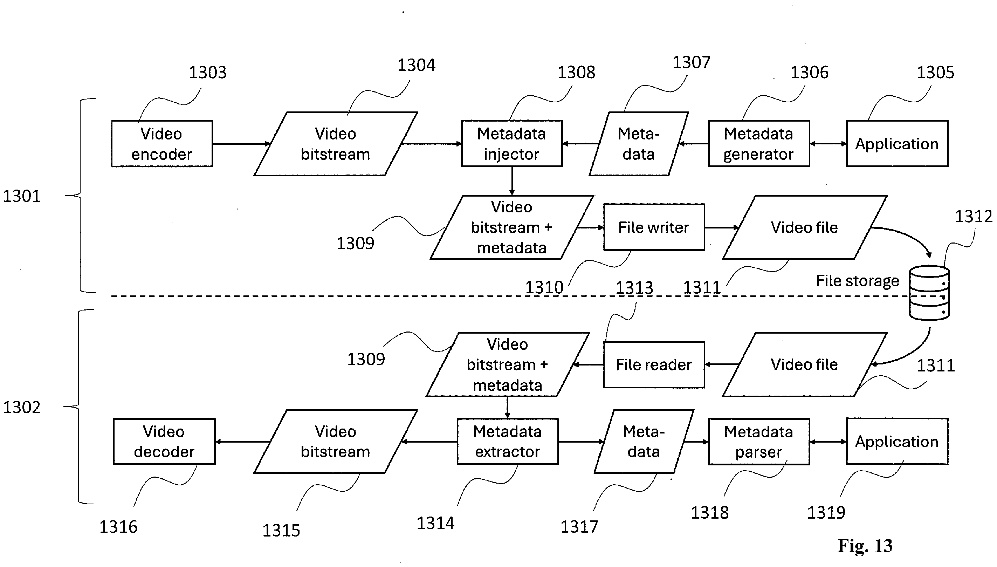

Fig. 13 shows a schematic block diagram of the file based application scenario. The file based application scenario may comprise an encoder and encapsulation part 1301 and a decoder and de-encapsulation part 1302. It is noted that those parts may be located in different devices or at a same device and that each of the parts, the encoder and encapsulation part 1301 and the decoder and de-encapsulation part 1302, may be implemented as a centralized or dedicated apparatus or as a decentralized system, i.e., using distributed apparatus or devices.

For example, a video encoder 1303 may provide for a video bitstream 1304. It is noted that the reference to video bitstreams and video codecs is chosen as an example only and does not limit the scope of the present invention. To the contrary, a similar approach as described herein may be applied to non-video codecs such as audio or other media codecs that use a discrete time structure unit similar to NAL or OBU units and for which a certain bit or byte sequence may be used to differentiate them from existing data units of that codec.

An application 1305 may provide information to a metadata generator 1306 that provides metadata 1307 to a metadata injector 1308 that is adapted to obtain media data associated with a media bitstream comprising a media bitstream structure, e.g., the video bitstream 1304. The metadata injector 1308 may further obtain or receive the metadata 1307. Metadata injector 1308 generates a metadata structure to be inserted into the media bitstream data structure, i.e., into the video bitstream 1304. In doing so, the metadata injector 1308 may determine an insertion position in the obtained media bitstream as a position to insert the metadata data structure.

The metadata injector 1308 may insert the metadata data structure at the determined position in the media bitstream. As a result, an enhanced media bitstream 1309 may be obtained, e.g., the video bitstream including the metadata. According to the metadata data structure, a header of the metadata data structure and a payload thereof may be structured, e.g., according to the used media codec. A file writer 1310 may generate a video file 1311 and may store the video file 1311 in a file storage 1312. The file storage 1312 may be located on the encoder and encapsulation side 1301, the decoder and de-encapsulation side 1302 or located remotely.

At the decoder and de-encapsulation side 1302, the video file 1311 may be obtained or received or retrieved from the file storage 1312 using a file reader 1313. The contained video bitstream and metadata 1309 may be provided to a metadata extractor 1314 that may obtain the media bitstream and may parse a plurality of data units of the media bitstream. For each parsed data unit of the plurality of data units, the metadata extractor 1314 may determine whether the parsed data unit comprises or is a metadata data unit or a non-metadata data unit according to a media coding standard of the media bitstream.

The metadata extractor 1314 may remove the parsed metadata data unit from the media bitstream if the parsed data unit comprises or is a metadata data unit, to thereby obtain a manipulated or different media bitstream such as a video bitstream 1315 that may essentially or totally correspond to video bitstream 1304 and that may be provided to a video decoder 1316. The extracted metadata data units, e.g., metadata 1317 that may at least partially, essentially or totally correspond to metadata 1307, may be provided to a metadata parser 1318 being in communication with an application 1319 consuming the metadata or using it. The application 1319 may be a same or a different application when compared to application 1305.

### Scenario: Network packet-based application scenario

In this scenario, it is to be noted that:
- Both the device generating and consuming the video files can be an end user device (mobile device, laptop, smartwatch, et...) or a network element (edge serve, cloud server, intermediate element such as Media-Aware Network Element (MANE)).
- The full set of functions, e.g. metadata injector, of each system (generating and consuming) can be partly executed on a device and the rest on another device. For instance, the metadata injector can be executed on a server while the encoding is done on a local device.
- The device generating the video file and consuming the video file can be the same device; this case is not the most common.
- The video encoder and the metadata injector can operate at the same time or at different point in time, which is the entire video bitstream can be generated up front and then the metadata is injected.
- In its most simple form, the video stream is a form of the video bitstream that is made parsable, i.e. with start codes to identify the start of the bitstream units (e.g. NAL or OBU). This form is defined in Annex B of the corresponding standards, AVC, HEVC, EVC, VVC and AV1.
- Otherwise, the video stream can be a sequence of packets containing the video bitstream such_packets can be RTP packets, MPEG-2 TS packets, etc...
- The application in the generating system and the one in the consuming system may be the same or be different.

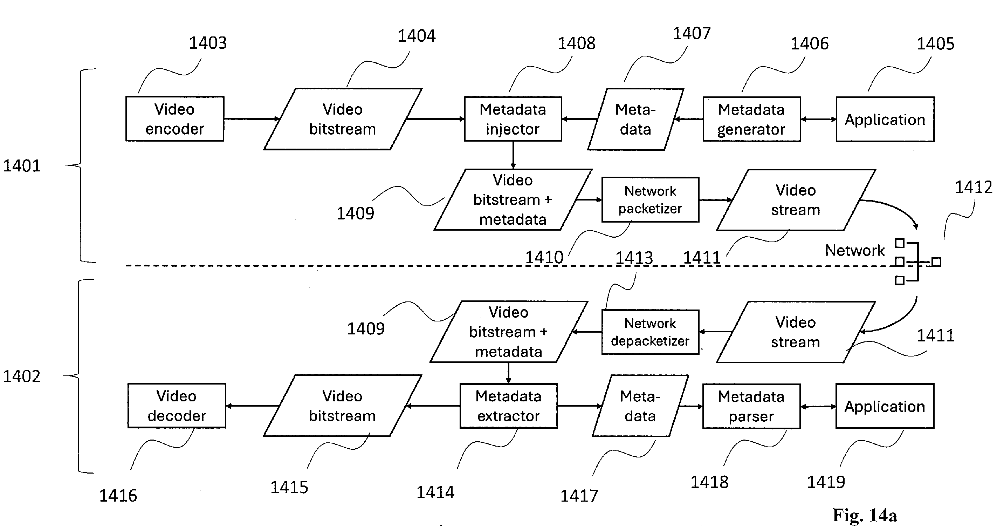

Fig. 14a shows a schematic block diagram of the network packet based application scenario. The file based application scenario may comprise an encoder and encapsulation part 1401 and a decoder and de-encapsulation part 1402. It is noted that those parts may be located in different devices or at a same device and that each of the parts, the encoder and encapsulation part 1401 and the decoder and de-encapsulation part 1402, may be implemented as a centralized or dedicated apparatus or as a decentralized system, i.e., using distributed apparatus or devices.

For example, a video encoder 1403 may provide for a video bitstream 1304. It is noted that the reference to video bitstreams and video codecs is chosen as an example only and does not limit the scope of the present invention. To the contrary, a similar approach as described herein may be applied to non-video codecs such as audio or other media codecs that use a discrete time structure unit similar to NAL or OBU units and for which a certain bit or byte sequence may be used to differentiate them from existing data units of that codec.

An application 1405 may provide information to a metadata generator 1406 that provides metadata 1407 to a metadata injector 1408 that is adapted to obtain media data associated with a media bitstream comprising a media bitstream structure, e.g., the video bitstream 1404. The metadata injector 1408 may further obtain or receive the metadata 1407. Metadata injector 1408 generates a metadata structure to be inserted into the media bitstream data structure, i.e., into the video bitstream 1404. In doing so, the metadata injector 1408 may determine an insertion position in the obtained media bitstream as a position to insert the metadata data structure.

The metadata injector 1408 may insert the metadata data structure at the determined position in the media bitstream. As a result, an enhanced media bitstream 1409 may be obtained, e.g., the video bitstream including the metadata. According to the metadata data structure, a header of the metadata data structure and a payload thereof may be structured, e.g., according to the used media codec. A network packetizer 1410 may generate a media stream 1411 such as a video stream and may provide the media stream 1411 to a network 1412.

At the decoder and de-encapsulation side 1402, the media stream 1411 may be obtained or received or retrieved from the network 1412 using a network depacketizer 1413. The obtained media bitstream and metadata 1409 may be provided to a metadata extractor 1414 that may obtain the media bitstream and may parse a plurality of data units of the media bitstream. For each parsed data unit of the plurality of data units, the metadata extractor 1414 may determine whether the parsed data unit comprises or is a metadata data unit or a non-metadata data unit according to a media coding standard of the media bitstream.

The metadata extractor 1414 may remove the parsed metadata data unit from the media bitstream if the parsed data unit comprises or is a metadata data unit, to thereby obtain a manipulated or different media bitstream such as a video bitstream 1415 that may essentially or totally correspond to video bitstream 1404 and that may be provided to a video decoder 1416. The extracted metadata data units, e.g., metadata 1417 that may at least partially, essentially or totally correspond to metadata 1407, may be provided to a metadata parser 1418 being in communication with an application 1419 consuming the metadata or using it. The application 1419 may be a same or a different application when compared to application 1405.

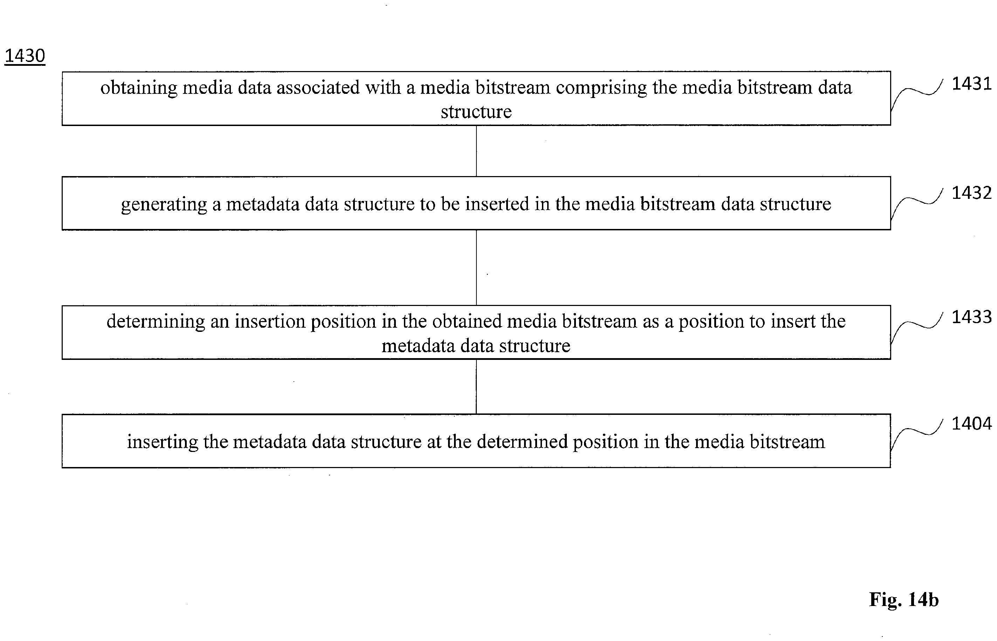

Fig. 14b shows a schematic flow chart of a method according to an embodiment that may be executed, for example, on encoder and encapsulation side 1301 and/or 1441. A step 1431 comprises obtaining media data associated with a media bitstream comprising the media bitstream data structure subject to further processing. A step 1432 comprises generating a metadata structured to be inserted in the media bitstream data structure. A step 1433 comprises determining an insertion position in the obtained media bitstream as a position to insert the metadata structure. A step 1404 comprises inserting the metadata data structure at the determined position in the media bitstream.

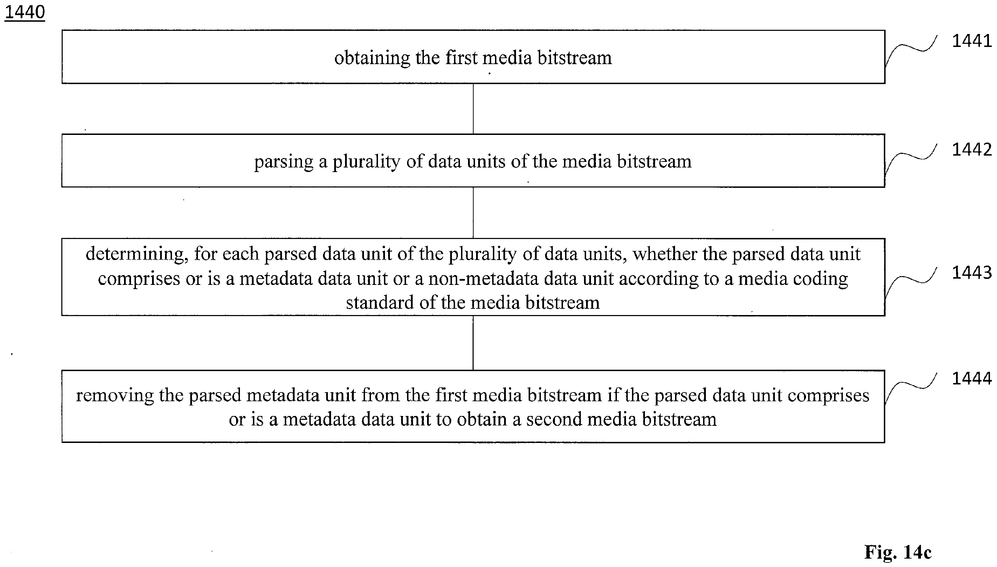

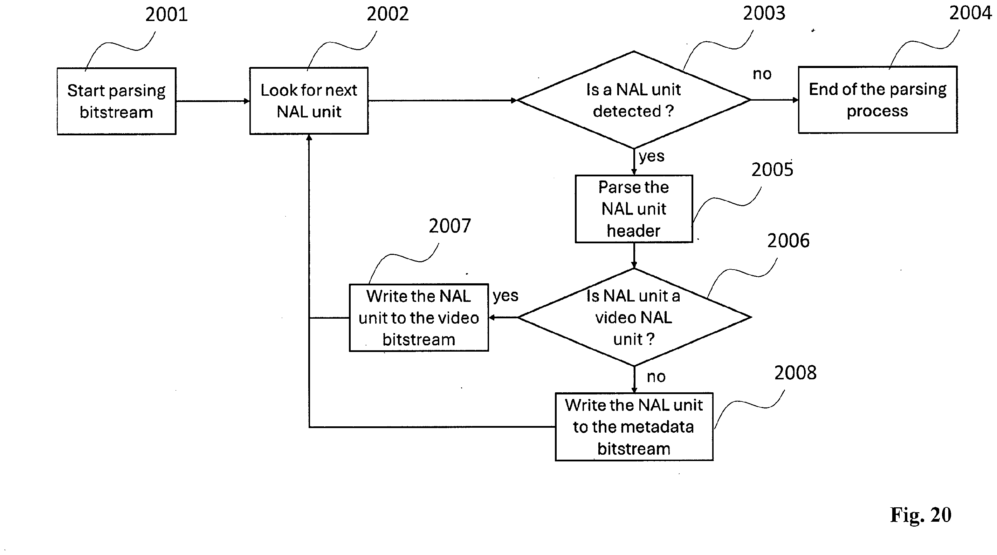

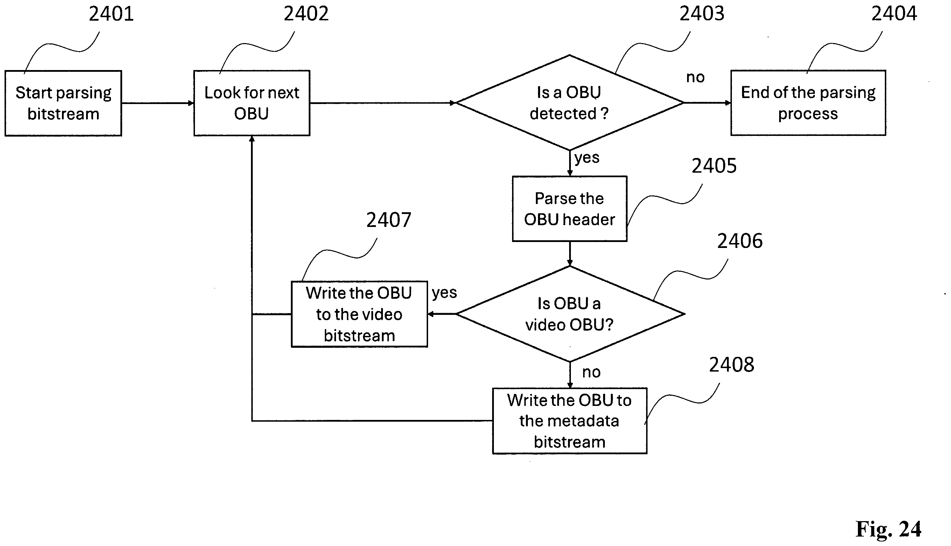

Fig. 14c shows a schematic flow diagram of a method 1440 according to an embodiment that may be executed, for example, on decoder and de-encapsulation side 1302 and/or 1402. A step 1441 comprises obtaining the first media bitstream, e.g., bitstream 1411 or the video file 1311 converted by file reader 1314. A step 1442 comprises parsing a plurality of data units of the media bitstream. A step 1443 comprises determining, for each parsed data unit of the plurality of data units, whether the parsed data unit comprises or is a metadata unit or a non-metadata unit according to a media coding standard of the media bitstream. Further details and examples for this step are described, for example, in connection with Fig. 20 and Fig. 24.

A step 1444 comprises removing the parsed metadata unit from the first media bitstream if the parsed data unit comprises or is a metadata unit to obtain a second media bitstream.

### Steps

The steps for inserting application-level metadata in a video bitstream comprise:
1. Obtaining a video bitstream.
2. Generating a metadata data structure to be inserted in the video bitstream data structure.
3. Generating or obtaining the payload of the metadata structure.
4. Determining the position in the obtained video bitstream to insert the generated metadata.
5. Writing the generated metadata data structure containing the generated payload at the determined position in the obtained video bitstream.

Optionally, In step 3, the method may retrieve data from the application in order to generate the payload in the case that the method cannot autonomously generate the payload. This occurs for instance when the metadata comes from an application context which the bitstream creation process has no access to. Thus, by retrieving data from an application and using the retrieved data for generating the payload of the metadata data structure, a lack of possibility to autonomously generate the payload of the metadata data structure may be overcome.

Comments:
- In step 1, the video bitstream can be produced at the same time, i.e. a video encoder is generating a bitstream at the same time of the execution of some or all of those steps.
- In step 2, the generated metadata data structure is generated as being suitable for the targeted video coding standard or coding scheme since the data structure can be similar across video coding standards but is not necessarily exactly the same.

In contrast, the payload of the metadata structure may be identical when inserted in video bitstreams from different standards.

The steps for extracting application-level metadata from a video bitstream comprise:
1. Obtaining a video bitstream possibly containing application-level metadata.
2. For each parsed data unit of the video bitstream, determining whether the parsed data unit is a metadata data unit or a conventional data unit defined by the corresponding video coding standard of the video bitstream.
3. Removing the detected metadata units from the video bitstream.
4. Generating an output video bitstream without the detected metadata units.

Optionally, in step 3, the metadata units are additionally passed on to the application via an API, a filesystem, a network socket, a memory, etc..... Alternatively or in addition, after step 4, the generated video bitstream may be passed on to a video decoder if to be decoded immediately.

### Embodiments

### Metadata data structure syntax

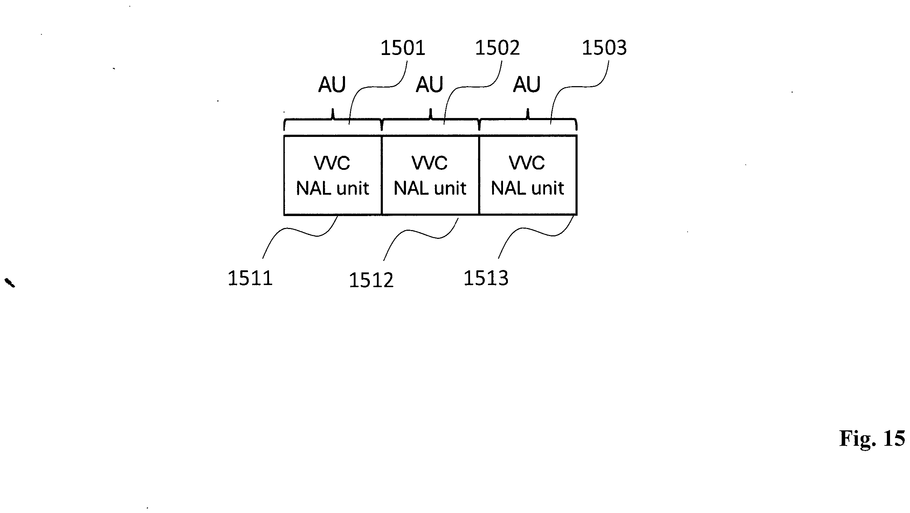

The structure of a video bitstream can be generally described as the succession of access units (AUs) when being a term defined in NAL-based coding standards and in MPEG Systems standards or temporal units being a term defined in AV1. An access unit, AU, may correspond to the media data for a given point in time of the media timeline. As an example, Fig. 15 represents 3 access units 1501, 1502 and 1503 in a VVC bitstream each comprising or formed by one NAL unit 1511, 1512, 1513.

In addition to coded picture, an access unit may contain information required for the decoding of the video bitstream. For instance, parameter sets which we use as a term to collectively refer to any type of parameter sets such as picture parameter set, sequence parameter set, video parameter, etc. as defined in several of the NAL-based family of video coding standards. Lastly another type of NAL units are SEI messages which are present in access units. This way SEI message can be associated to coded pictures.

In this spirit, the metadata structure defined in this invention follows the logic of any other NAL unit and can be logically inserted into access units. We say logically inserted because in most cases, the access units' boundaries are implicit and not explicitly signalled in a video bitstream.

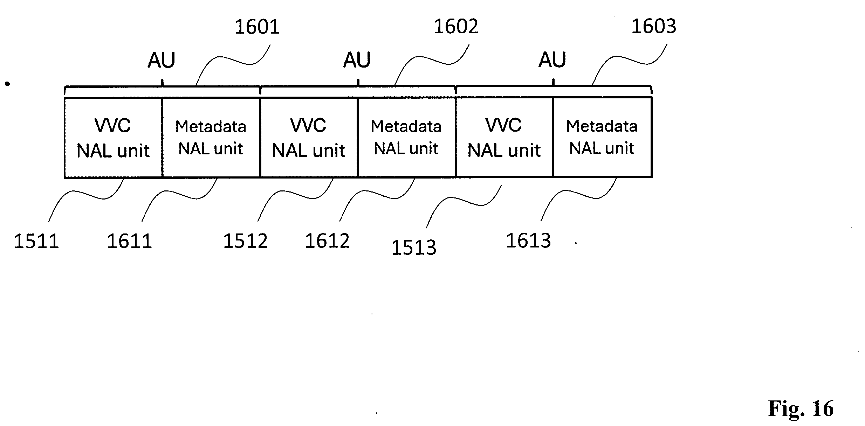

As example, Fig. 16 represents the new metadata data structure here called Metadata NAL unit as part of a VVC bitstream. Each VVC NAL unit 1511, 1512 and 1513 may be associated with a metadata data structure 1611, 1612, 1613 respectively to form an AU 1601, 1602, 1603 respectively.

### For NAL unit-based video bitstreams

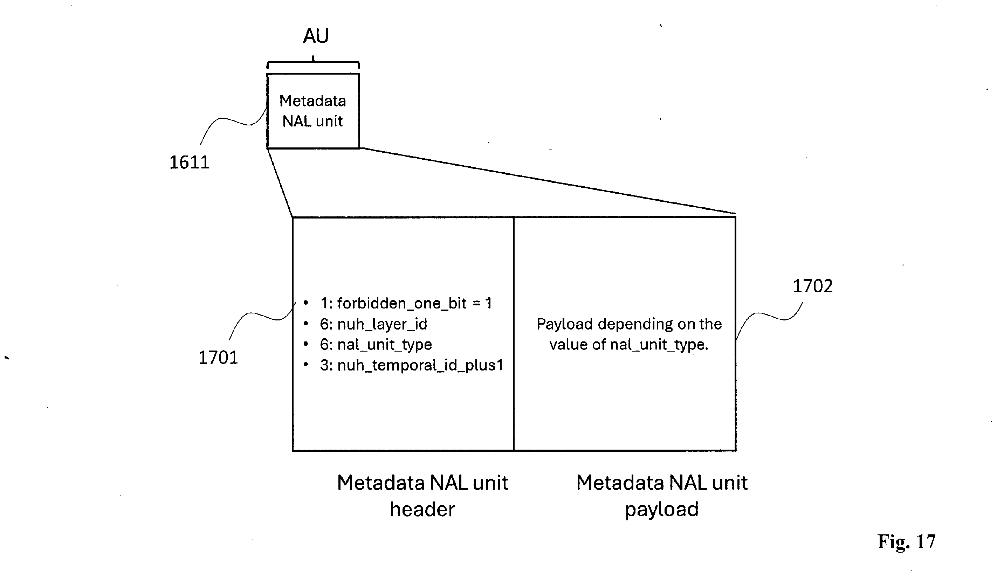

A metadata data structure 1611 may comprise, for example, a header 1701 and payload 1702 as shown in Fig. 17 illustrating a metadata NAL unit with first bit being set to one. A possible design principle for the header 1701, e.g., a metadata NAL unit header may be in accordance with the following:
- The first bit of the header is set to one to differentiate from existing NAL units of the video coding standards that always have it set to zero.
- The header further carries a NAL unit type which will determine the payload in this metadata NAL which follows the header. This can identify any type of metadata an application, service, regulator, etc. desires to carry. Note that those are not the NAL unit types values defined in video coding standards, i.e., of past, present and future coding standards, but a different range of possible values.
- Lastly, the header carries a layer id and a temporal id that are defined by several NAL unit-based video coding standards. The bit length of those fields has been set such that it can accommodate the highest bit length of similar fields across the video coding standards defining them. To be future proof, one can also choose a bit length higher than the existing video coding standards.

For representation purpose on the above and following figures, the following convention may be implemented:
Bit length: field name [= value]

The bit length of each field can be adjusted to different trade-offs. Those ones are possibilities based on technically sensible choices.

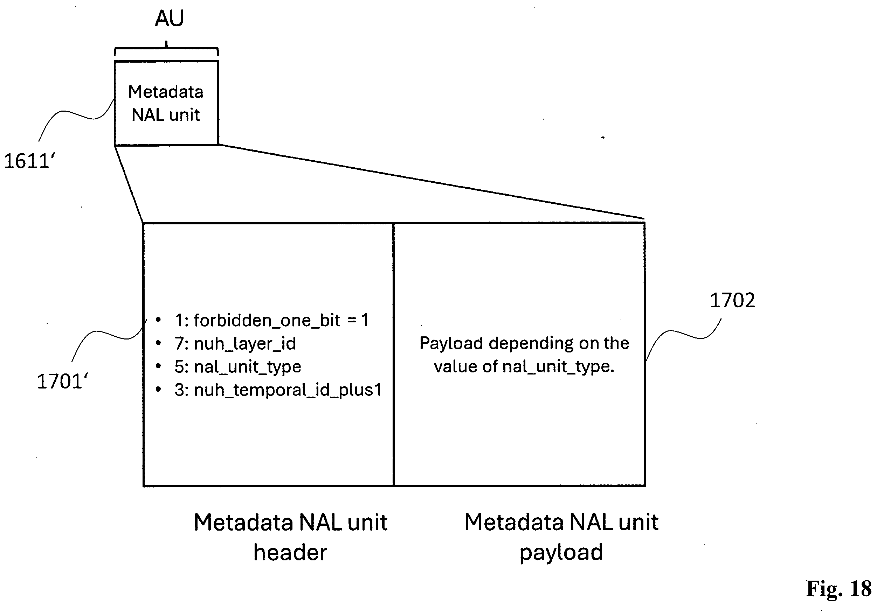

For instance, a small refinement as shown in Fig. 18 would make the header to be parsable as a first byte followed by a second byte. In the metadata NAL unit 1611' a header 1701' is adjusted with a first bit being set to one.

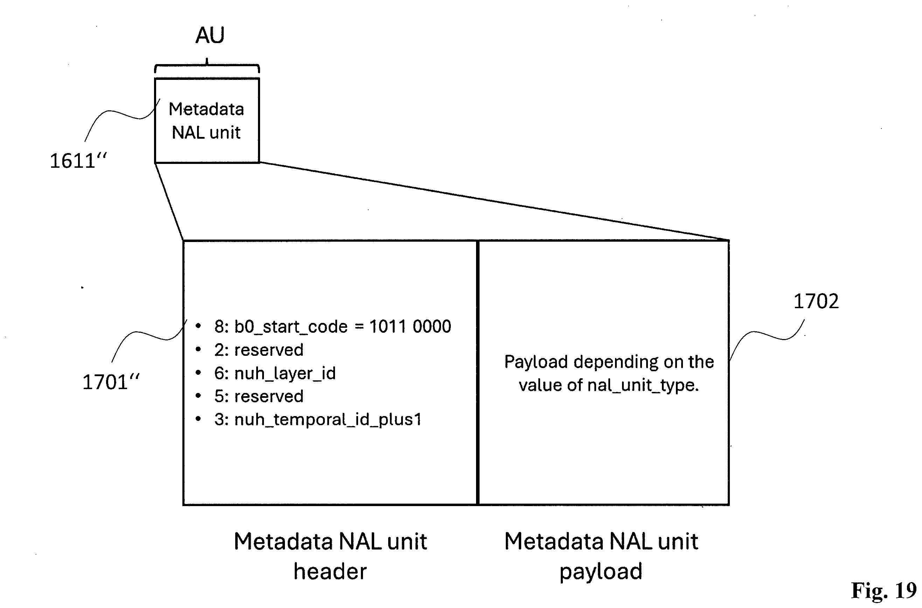

Because this design uses the first bit being set to one, there is one context in which the combination of a NAL unit start code, i.e. 0x000001, and then this first bit can potentially collide with a MPEG-2 part 1 Systems start code, and that is a PES packet stream. This could also be considered irrelevant if such Metadata NAL unit will never be transmitted within PES packets. Nevertheless, a way to avoid this issue is to start the header with a byte which corresponds to a start code of MPEG-2 video starting whose first bit is also set to one and a start code that is not used. For this purpose, any of those byte's values, 0xB0, 0xB1 and 0xB6 would be suitable according to Fig. 8. This is represented in a modified header 1701" of metadata NAL unit 1611" shown in Fig. 19.

Based on any of the above designs of Metadata NAL unit, the steps corresponding to a possible parsing logic according to an embodiment are illustrated in the block diagram of Fig. 20 showing a parsing logic of the application-level metadata in NAL unit-based video bitstream.

At 2001, parsing of a bitstream according to an embodiment is started. At 2002, there is looked for a next NAL unit. At a decision 2003, it is decided whether a NAL unit is detected. If this is not the case, 2004 causes end of the parsing process. However, if 2003 results in yes, 2005 leads to parsing the NAL unit header. In a decision 2006, there is decided whether the NAL unit is a video NAL unit. If the answer is yes, 2007 causes to write the NAL unit to the video bitstream and to return to 2002. If the answer of 2006 is no, 2008 causes to write the NAL unit to the metadata bitstream and to return to 2002. As may be seen, with the process shown in Fig. 20, the video bitstream may be separated from the metadata bitstream.

### For OBU-based video bitstreams

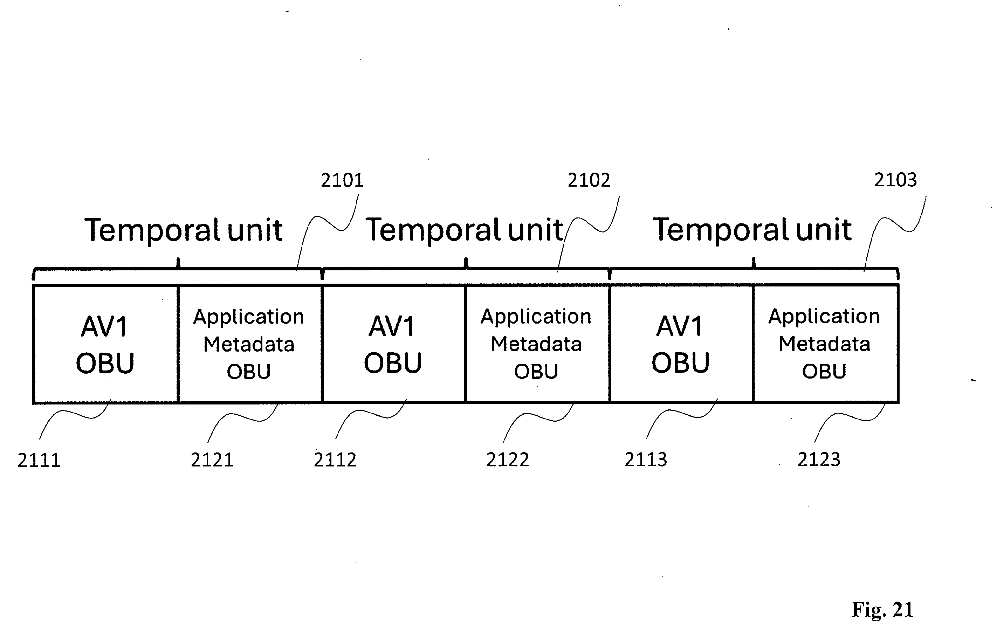

For OBUs, a similar approach can be taken. Here we call the new structure Application Metadata OBU such that it is not confused with metadata OBU which is the equivalent of SEI messages in AV1. Fig. 21 shows an example of a part of an enhanced bitstream according to an embodiment based on the AV1 OVU concept. Temporal units 2101, 2102 and 2103 each comprise an AV1 OVU and application metadata OVUs 2121, 2122, 2123 respectively. Fig. 21 shows an example of Application Metadata OBU in AV1 bitstream.

Reference is made to the description provided for NAL unit-based video bitstreams according to which the header further carries a NAL unit type which will determine the payload in this metadata NAL which follows the header. It is described that this can identify any type of metadata an application, service, regulator, etc. desires to carry. Note that those are not the NAL unit types values defined in video coding standards, i.e., of past, present and future coding schemes, but a different range of possible values. This also applies for OBU, e.g., for AV1.

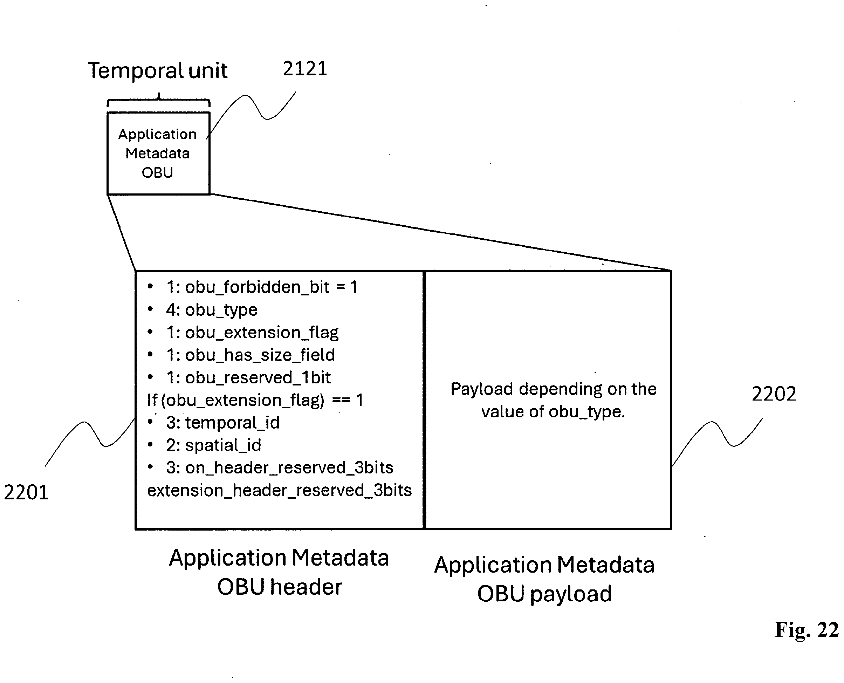

In the same spirit, a first design of the Application Metadata OBU can follow the OBU header fields but starting with a first bit set to one as shown for header 2201 of Application Metadata OBU 2121 that is associated with metadata payload 2202 as shown in Fig. 22 illustrating application Metadata OBU with first bit set to one.

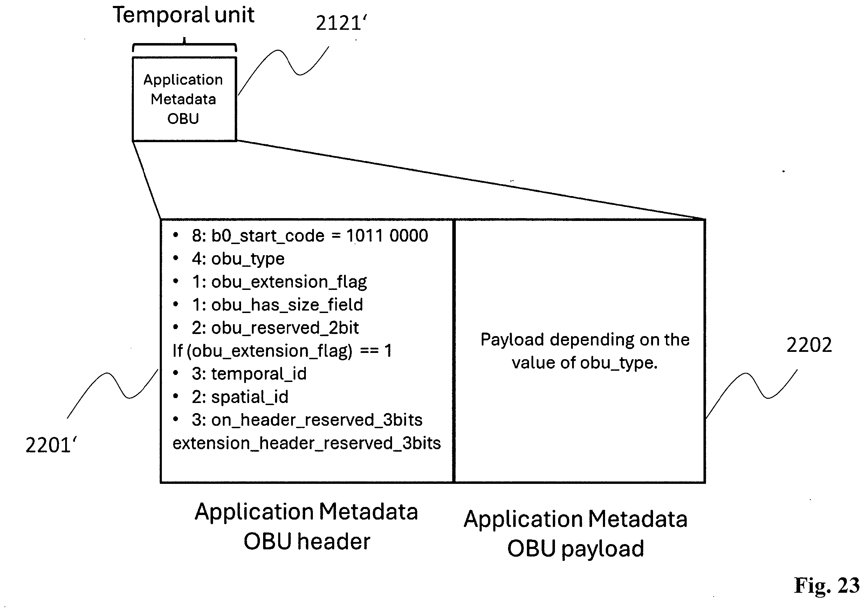

For the same reason as for NAL units when OBUs are transmitted in PES packets (according to the MPEG-2 TS carriage of AV1 [6]) a start code of 0x000001 is prefixing an OBU and thus could cause confusion with MPEG-2 part 1 start codes. As a result, a byte with an unused MPEG-2 part 2 Video start code can be used as shown in Fig. 23 in connection with a header 2201' of modified Application Metadata OBU 2121'. That is, Fig. 23 shows application Metadata OBU starting with an unused MPEG-2 video start code.

Based on any of the above design of Metadata NAL unit, the steps corresponding of the parsing logic are illustrated in the block diagram of Fig. 24. At 2401, parsing of a bitstream according to an embodiment is started. At 2402, there is looked for a next OBU. At a decision 2403, it is decided whether a OBU is detected. If this is not the case, 2404 causes end of the parsing process. However, if 2403 results in yes, 2405 leads to parsing the OBU header. In a decision 2406, there is decided whether the OBU is a video OBU. If the answer is yes, 2407 causes to write the OBU to the video bitstream and to return to 2402. If the answer of 2406 is no, 2408 causes to write the OBU to the metadata bitstream and to return to 2402. As may be seen, with the process shown in Fig. 24, the video bitstream may be separated from the metadata bitstream. In other words, Fig. 24 shows a possible parsing logic of the application-level metadata in OBU-based video bitstream.

### For both NAL unit and OBU-based video bitstreams

Since the video services in the industry rely on multiple video coding standards for the same service, including both NAL and OBU- based, it is advantageous to define a metadata structure that can accommodate both bitstreams. This structure may be referred to as Application Metadata Unit (AMU).

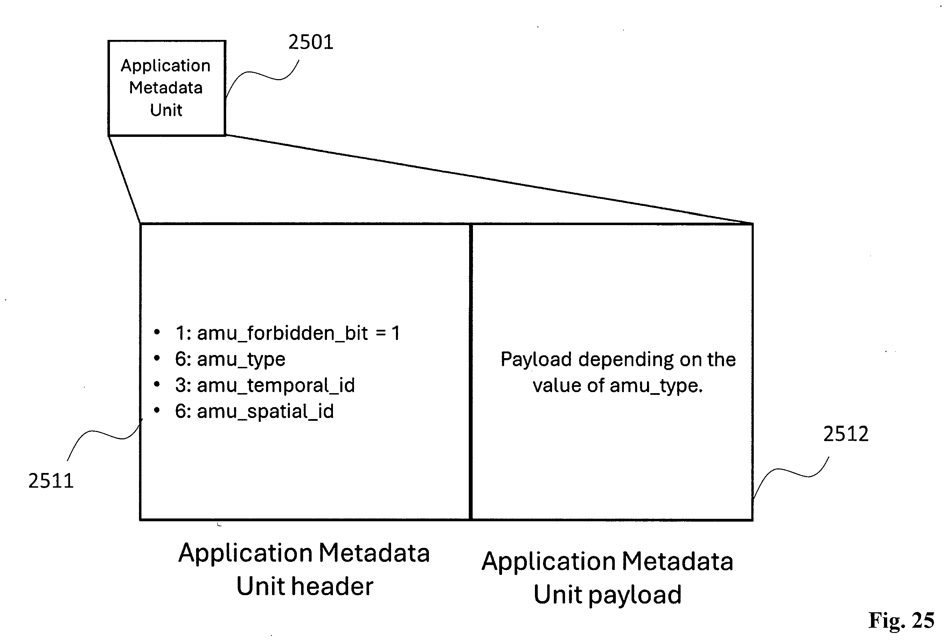

Fig. 25 shows an example of an Application Metadata Unit 2501 for both NAL and OBU video bitstreams, the metadata data structure comprising a header 2511 and payload 2512. The header 2511 may start again with the first bit field set to 1. The following fields may be:
- amu_type that will determine the payload type of this unit.
- amu_temporal_id that can accommodate both the nuh_temporal_id_plus1 of NALs and the temporal_id of OBUs.
- amu_spatial_id that can accommodate both the nuh_layer_id of NALs and the spatial_id of OBUs.

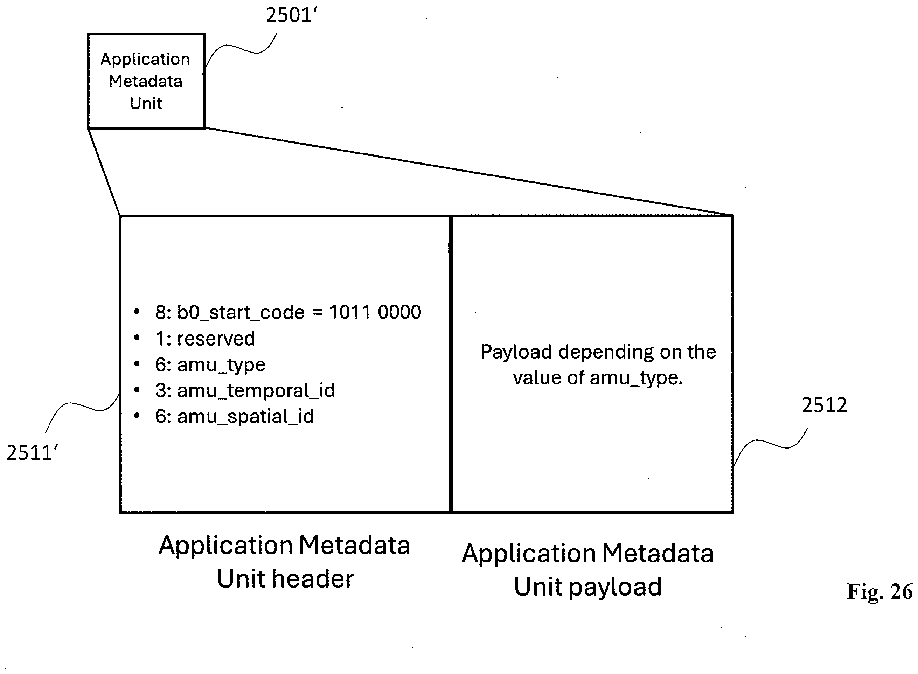

For the same reason in the context of encapsulation into PES packets, one may define, as alternative, the header to be started with an unused MPEG-2 part 2 Video start code as shown in Fig. 26 where a modified AMU 2501' comprises a modified header 2511' to provide for an Application Metadata Unit starting with an unused MPEG-2 video start code.

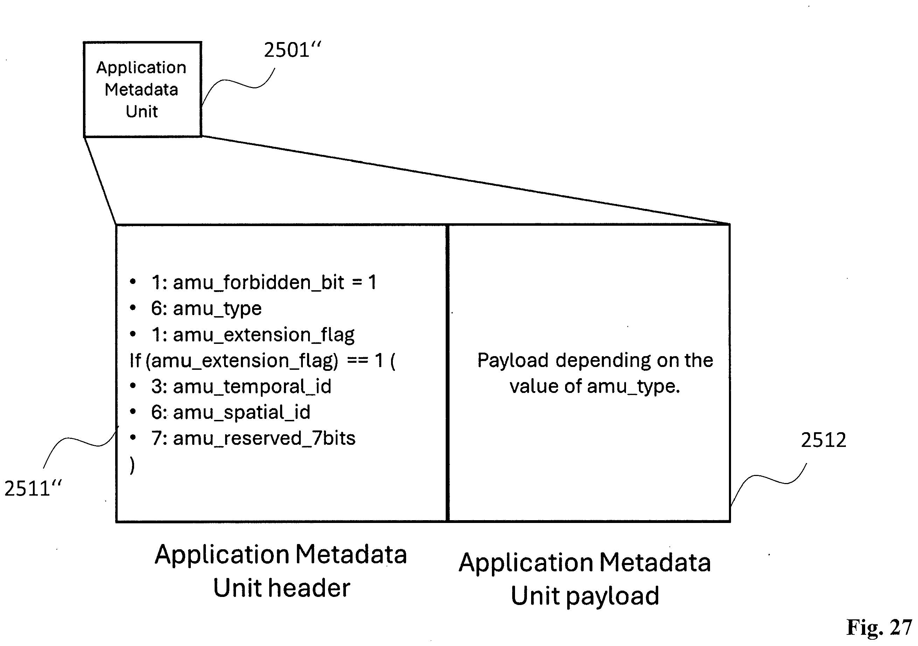

Additionally, as alternative, one can define the header to be adaptive to OBU case wherein the temporal_id and spatial_id are optional. In this case, a flag is introduced. This way this allows to avoid one additional byte when it is not useful as shown in Fig. 27 where a modified AMU 2501" comprises a modified header 2511" to provide for an Application Metadata Unit starting with an extension flag for optional fields.

Also here in this variant, one can used a one-byte unused MPEG-2 video start code instead of just a one bit set to 1.

### Transmission and storage

This is a key point of the invention. To make it look like a regular video coding unit to encapsulation and packetization processes, those metadata data structures are treated the same way when it comes to their insertion in a bitstream.

To this end, when the bitstream is a NAL unit bitstream and stored in the so-called byte stream format (Annex B in each NAL unit-based video coding standard), the Metadata NAL unit needs to be prefixed by the same start code as regular NAL units which is 0x000001. When the bitstream is stored without start code, e.g. in a container file (ISOBMFF or its derivative, Matroska, etc.), the Metadata NAL units are also treated the same way as the regular NAL units. Similarly, Metadata NAL units can be packaged into RTP packets and send accordingly as any other NAL units.

Those considerations apply to the OBU bitstream as well. Note that AV1 does not define a start code 0x000001 for prefixing OBUs but the MPEG-2 TS carriage of AV1 specification does [6].

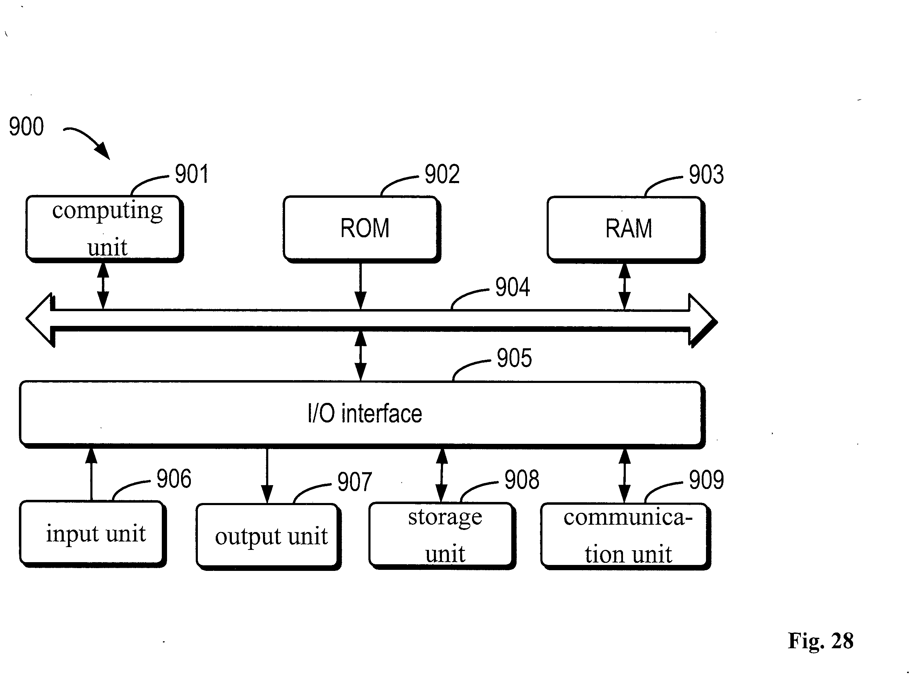

Fig. 28 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely , on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Amongst others, embodiments of the present disclosure provide for the following advantages:
- File encapsulation (e.g. ISOBMFF, Matroska, etc..) and network encapsulation (MPEG-2 PES packet, RTP packet) do not have to be modified to encapsulate the metadata data structure since this metadata data structure has the appearance of a conventional video bitstream unit. Handling those new metadata data structure will be transparent for those systems.
- Synchronization between the metadata and the content can be achieved using the NAL/OBU timing concept of access unit and temporal unit.
- Association between the metadata and each coded frame can be achieved as with existing SEI message and metadata OBU since the solution mimics those data structure.
- The new metadata structure can be used across several video codec with header fields corresponding to existing fields in multiple standards.
- A system parsing the new metadata structure would know from the header what type of payload it is containing as opposed to SEI messages and metadata OBU wherein one needs to parse first the header and NAL/OBU type and then parse the sub type in the payload to determine the type of metadata. With the proposed solution, the type of metadata can be directly signalled in the header of the data structure which saves parsing operation, reading bytes and bits, and a filtering/extracting process can thus be implemented faster.

Further embodiments are now described:
A 1^{st} embodiment provides a method of inserting metadata, i.e., a metadata data structure into a media bitstream, the method comprising:
   obtaining the media bitstream, e.g., by obtaining the media data and forming the bitstream or by obtaining the bitstream as being already forms, associated with;
   generating a metadata data structure to be inserted in the media bitstream ;
   determining an insertion position in the media bitstream as a position to insert the metadata data structure;
   inserting the metadata data structure at the determined position in the media bitstream.
A 2nd embodiment provides the method according to the 1st embodiment, wherein the media data is a data file storing at least a part of the media bitstream; or is the media bitstream containing a sequence of packets.
A 3^{rd} embodiment provides the method according to the 1^{st} or 2^{nd} embodiment, wherein media bitstream is a bitstream according to a discrete time structure unit of a coding scheme; wherein the metadata data structure is generated to comprise a sequence of bits to differentiate the metadata data structure from data units of the coding scheme.
A 4^{th} embodiment provides the method according to the previous embodiments, wherein the media bitstream is one of a video bitstream and an audio bitstream.
A 5^{th} embodiment provides the method according to the previous embodiments, wherein metadata associated with the metadata data structure is application-level metadata associated with an application providing and/or consuming the media bitstream.
A 6^{th} embodiment provides the method according to the previous embodiments, further comprising:
   generating a payload of the metadata data structure,
   wherein inserting the metadata data structure at the determined position in the media bitstream comprises to insert the metadata data structure comprising the payload of the metadata data structure.
A 7^{th} embodiment provides the method according to the 6^{th} embodiment, further comprising:
   retrieving data from an application and using the retrieved data for generating the payload of the metadata data structure.
An 8^{th} embodiment provides the method according to the 7^{th} embodiment, further comprising:
   wherein metadata forming a basis for the payload of the metadata data structure is associated with an application context of an application providing and/or consuming the media bitstream.
A 9^{th} embodiment provides the method according the previous embodiments, wherein the position is determined between two units of the media bitstream data; at a beginning of a very first unit of the media bitstream or at an end of a last unit of the media bitstream.
A 10^{th} embodiment provides the method according the previous embodiments, further comprising:
   producing the media bitstream.
An 11^{th} embodiment provides the method according to the 10^{th} embodiment, wherein producing the media bitstream on the one hand and generating the metadata data structure and/or generating a payload of the metadata data structure on the other hand are performed at a same time or at different points in time.
A 12^{th} embodiment provides the method according the previous embodiments, wherein the metadata data structure is generated in accordance with a targeted media coding scheme.
A 13^{th} embodiment provides the method according to the 12^{th} embodiment, wherein for different media coding scheme a different metadata data structure is determined; wherein for the different media coding schemes, an identical payload of the metadata data structure is generated to be inserted in media bitstreams from different media coding schemes.
A 14^{th} embodiment provides the method according the previous embodiments, wherein the media bitstream comprises a succession of access units, AUs, or temporal units.
A 15^{th} embodiment provides the method according to the 14^{th} embodiment, wherein an access unit, AU, corresponds to media data of the media bitstream for a given point in time of a media timeline.
A 16^{th} embodiment provides the method according to the 14^{th} or 15^{th} embodiment, wherein an access unit, AU, comprises a coded picture and information for a decoding of the media bitstream.
A 17^{th} embodiment provides the method according to the 16^{th} embodiment, wherein the information for the decoding of the media bitstream comprises one or more of:
   - a picture parameter set,
   - a sequence parameter set,
   - a video parameter, and
   - a Supplemental Enhancement Information, SEI, message
An 18^{th} embodiment provides the method according the previous embodiments, wherein the metadata data structure is generated according to a Network Abstraction Layer unit, NAL unit, compatible with a target media standard for logical insertion into an access unit, AU, thereof.
A 19^{th} embodiment provides the method according the previous embodiments, wherein the media bitstream is a Network Abstraction Layer unit, NAL unit, based video bitstream.
A 20^{th} embodiment provides the method according to the 18^{th} embodiment, wherein the metadata data structure is generated to comprise a header and such that a foremost bit of the header is set to one.
A 21^{st} embodiment provides the method according to the 20^{th} embodiment, wherein the metadata data structure is generated such that the header further comprises information indicating a NAL unit type that determines a payload of the metadata NAL unit following the header.
A 22^{nd} embodiment provides the method according to the 21^{st} embodiment, wherein the information indicating the NAL unit type identifies as metadata at least one of:
   - an application,
   - a service, and
   - a regulator.
A 23^{rd} embodiment provides the method according to the 21^{st} or 22^{nd} embodiment, wherein the information indicating the NAL unit type excludes NAL unit types values defined by the video coding scheme.
A 24^{th} embodiment provides the method according to the 20^{th} to 23^{rd} embodiments, wherein the metadata data structure is generated such that the header further comprises information indicating a layer id and a temporal id.
A 25^{th} embodiment provides the method according to the 24^{th}, wherein the layer id and a temporal id are in accordance with a NAL unit-based video coding scheme.
A 26^{th} embodiment provides the method according to the 25^{th}, wherein a bit length of the information indicating the layer id and/or a bit length of the information indicating the temporal id is at least a highest bit length of such a field according to the NAL unit-based video coding scheme.
A 27^{th} embodiment provides the method according to the 20^{th} to 26^{th} embodiments, wherein the header comprises a plurality of fields, wherein the method comprises to adjust a length of at least one field.
A 28^{th} embodiment provides the method according to the 20^{th} to 27^{th} embodiments, wherein the header is generated be parsable as a starting first byte followed by at least a second byte.
A 29^{th} embodiment provides the method according to the 20^{th} to 28^{th} embodiments, wherein the header is generated to comprise as the starting first byte a byte corresponding to an unused start code of an MPEG-2 video codec whose first bit is set to one.
A 30^{th} embodiment provides the method according to the 29^{th} embodiment, wherein a hexadecimal representation of the unused start code is one of:
   - 0xB0,
   - 0xB1, and
   - 0xB6
A 31^{st} embodiment provides the method according to the 1^{st} to 18^{th} embodiments, wherein the media bitstream is an Open Bitstream Unit, OBU, based video bitstream.
A 32^{nd} embodiment provides the method according to the 31^{st} embodiment, wherein the metadata data structure is generated to comprise a header and such that a foremost bit of the header is set to one.
A 33^{rd} embodiment provides the method according to the 32^{nd} embodiment, wherein the metadata data structure is generated such that the header further comprises information indicating an OBU type that determines a payload of the metadata OBU unit following the header.
A 34^{th} embodiment provides the method according to the 33^{rd} embodiment, wherein the information indicating the OBU type identifies as metadata at least one of:
   - an application,
   - a service, and
   - a regulator.
A 35^{th} embodiment provides the method according to the 33^{rd} or 34^{th} embodiment, wherein the information indicating the OBU type excludes OBU types values defined in the video coding schemes.
A 36^{th} embodiment provides the method according to the 34^{th} to 35^{th} embodiments, wherein the metadata data structure is generated such that the header further comprises information indicating a layer id and a temporal id.
A 37^{th} embodiment provides the method according to the 36^{th} embodiment, wherein the layer id and a temporal id are in accordance with a OBU-based video coding scheme.
A 38^{th} embodiment provides the method according to the 37^{th} embodiment, wherein a bit length of the information indicating the layer id and/or a bit length of the information indicating the temporal id is at least a highest bit length of such a field according to the OBU-based video coding scheme.
A 39th embodiment provides the method according to the 34th to 38th embodiments, wherein the header comprises a plurality of fields, wherein the method comprises to adjust a length of at least one field.
A 40th embodiment provides the method according to the 34th to 39th embodiments, wherein the header is generated be parsable as a starting first byte followed by at least a second byte.
A 41st embodiment provides the method according to the 34th to 40th embodiments, wherein the header is generated to comprise as the starting first byte a byte corresponding to an unused start code of an MPEG-2 video codec whose first bit is set to one.
A 42nd embodiment provides the method according to the 41st embodiment, wherein a hexadecimal representation of the unused start code is one of:
   - 0xB0,
   - 0xB1, and
   - 0xB6
A 43^{rd} embodiment provides the method according to the previous embodiments, wherein the metadata data structure is generated to accommodate a Network Abstraction Layer unit, NAL, video bitstream and an Open Bitstream Unit, OBU, based video bitstream.
A 44th embodiment provides the method according to the 43rd embodiment, wherein the metadata data structure is generated to comprise a header and metadata payload; wherein the a foremost bit of the header is set to one.
A 45th embodiment provides the method according to the 43rd or 44th embodiment, wherein the header comprises at least a subset of:
   - a type field identifying a type of the payload of a unit of the video bitstream;
   - an identifier identifying a nuh_temporal_id_plus1 of the NAL video bitstream and a temporal_id of the OBU video bitstream;
   - an identifier identifying a nuh_layer_id of the NAL video bitstream and a spatial_id of the OBU video bitstream.
A 46^{th} embodiment provides the method according to the 43rd or 44th embodiment, wherein the header is generated to comprise as a starting first byte a byte corresponding to an unused start code of an MPEG-2 video codec whose first bit is set to one.
A 47h embodiment provides the method according to the 43rd or 44th embodiment, wherein the header is generated in accordance with metadata related to an OBU video bitstream and, as an extension thereof, to comprise a flag indicating a presence of optional parameters of the metadata data structure.
A 48th embodiment provides the method according to the 47th embodiment, wherein the header is to comprise a byte corresponding to an unused start code of an MPEG-2 video codec whose first bit is set to one, the first bit forming the flag.
A 49th embodiment provides the method according to the previous embodiments, wherein the metadata data structure is inserted as a metadata unit such as a Metadata Network Abstraction Layer, NAL, Metadata NAL unit or a Metadata Open Bitstream Unit, Metadata OBU.
A 50th embodiment provides the method according to the previous embodiments, wherein the metadata data structure is generated to comprise a start code in accordance with a format of the media bitstream; or
   wherein the metadata data structure is generated without a start code in accordance with a format of the media bitstream.
A 5 1^{st} embodiment provides the method according to the 50^{th} embodiment, wherein the format of the media bitstream comprises a plurality of Network Abstraction Layer, NAL, units; each NAL unit comprising a start code, wherein the metadata data structure is generated to comprise the same start code; or
   wherein the format of the media bitstream comprises a plurality of Open Bitstream Units, OBU; each OBU comprising an unused start code of an MPEG-2 video codec whose first bit is set to one, wherein the metadata data structure is generated to comprise the same start code.
A 52^{nd} embodiment provides the method according to the previous embodiments, further comprising:
   packaging a plurality of metadata data structures as Metadata Network Abstraction Layer, NAL, units into at least one real-time transport protocol, RTP, packet; and sending the at least one RTP packet; or
   packaging a plurality of metadata data structures as Metadata Open Bitstream Units into at least one real-time transport protocol, RTP, packet; and sending the at least one RTP packet.
A 53^{rd} embodiment provides the method according to the previous embodiments, further comprising:
   storing the media bitstream with the metadata structure in a file storage; and/or
   providing the media bitstream with the metadata structure to a device consuming the media bitstream.
A 54^{th} embodiment provides a method of extracting metadata from a first media bitstream, the method comprising:
   obtaining the first media bitstream comprising a metadata data structure;
   parsing a plurality of data units of the media bitstream;
   determining, for each parsed data unit of the plurality of data units, whether the parsed data unit comprises or is a metadata data unit of the metadata data structure or is a data unit having a different data structure according to a media coding scheme of the media bitstream;
   removing the parsed metadata data unit from the first media bitstream if the parsed data unit comprises or is a metadata data unit to obtain a second media bitstream.
A 55^{th} embodiment provides the method according to the 54^{th} embodiment, further comprising
   providing the metadata unit to an application consuming the second media bitstream using an application programming interface, API.
A 56^{th} embodiment provides the method according to the 54^{th} or 55^{th} embodiment, further comprising:
   providing the second media bitstream to a video decoder.
A 57^{th} embodiment provides a method for encoding comprising the steps of one of the 1^{st} to 53^{rd} embodiments.
A 58th embodiment provides the method according to 57th embodiment, wherein the media bitstream is generated at the same time of generating the metadata data structure and/or inserting the metadata data structure at the determined position; and/or at a different point in time.
A 59th embodiment provides a method for decoding comprising the steps of one of the 54^{th} to 56^{th} embodiments.
A 60^{th} embodiment provides a non-transitory computer-readable storage medium comprising instructions which, when executed by a computer, cause the computer to carry out the method of any one of the preceding claims.
A 61st embodiment provides an encoding unit, comprising:
   an interface obtaining a media bitstream;
   a metadata generator for generating a metadata data structure to be inserted in the media bitstream;
   a metadata injector for determining an insertion position in the obtained media bitstream as a position to insert the metadata data structure;
   wherein the a metadata injector is adapted for inserting the metadata data structure at the determined position in the media bitstream.
A 62^{nd} embodiment provides the encoding unit according to the 61^{st} embodiment, being configured for at least one of:
   - providing the media bitstream to a different device;
   - decoding the media bitstream for use by the apparatus; and
   - providing the media bitstream to a network element
A 63^{rd} embodiment provides the encoding unit according to the 61^{st} or 62^{nd} embodiment, comprising an end-user device; and/or a network element.
A 64^{th} embodiment provides the encoding unit according to the 61^{st} to 63^{rd} embodiments, being a centralized apparatus or being a distributed system comprising a plurality of devices.
A 65^{th} embodiment provides the encoding unit according to the 61^{st} to 64^{th} embodiments, adapted to store the media bitstream with the metadata data structure as a video file in a file storage being located at a device of the system or in a network accessed by the system; or
   adapted to provide the media bitstream comprising a sequence of packets to a decoder.
A 66^{th} embodiment provides the encoding unit according to the 61^{st} to 65^{th} embodiments, comprising a media encoding unit for providing the media bitstream and wherein the media encoding unit and the metadata injector are adapted to operate at a same time or at different points in time.
A 67^{th} embodiment provides the encoding unit according to the 61^{st} to 66^{th} embodiments, wherein the metadata injector is configured for directly injecting the metadata into a media file containing the media bitstream.
A 68^{th} embodiment provides the encoding unit according to the 61^{st} to 67^{th} embodiments, configured for generating a parsable media file from the media bitstream containing the injected metadata data structure.
A 69^{th} embodiment provides the encoding unit according to the 68^{th} embodiment, wherein the media file is based on a media container format.
A 70^{th} embodiment provides the encoding unit according to the 61^{st} to 69^{th} embodiments, being an end-user device; or being a network element.
A 71^{st} embodiment provides a decoding unit, comprising:
   an interface for obtaining a media bitstream comprising a metadata data structure;
   a depacketizer configured for parsing a plurality of data units of the media bitstream;
   a metadata extractor configured for determining, for each parsed data unit of the plurality of data units, whether the parsed data unit comprises or is a metadata data unit of the metadata data structure or a data unit having a different data structure according to a media coding scheme of the media bitstream;
   wherein the metadata extractor is configured for removing the parsed metadata unit from the first media bitstream if the parsed data unit comprises or is a metadata data unit to obtain a second media bitstream.
A 72^{nd} embodiment provides the decoding unit according to the 71^{st} embodiment, being an end-user device; or being a network element.
A 73^{rd} embodiment provides a system comprising an encoding unitaccording to the 61^{st} to 70^{th} embodiments, wherein the encoding unitcomprises a processor for running a first application providing media data for the media bitstream;
   a decoding unit according to the claim 71^{st} or 72^{nd} embodiment, wherein the decoding unit comprises a processor for running a second application consuming the media bitstream comprising the metadata data structure;
   wherein the first application and the second application are same or different.
A 74^{th} embodiment provides the system according to the 73^{rd} embodiment, wherein the encoding unit and the decoding unit are part of a same device or; wherein the encoding unit is at least a part of a first device and the decoding unit is at least a part of a different second device.
A 75^{th} embodiment provides a data stream comprising a bitstream generated with a method according to one of the 1^{st} to 53^{rd} embodiments.
A 76^{th} embodiment provides a non-transitory computer-readable storage medium comprising a media file generated with a method according to one of the 1^{st} to 53^{rd} embodiments.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] ISO/IEC 23090-3:2024, Information technology - Coded representation of immersive media, Part 3: Versatile video coding, https://www.iso.org/standard/86516.html
[2] AV1 Bitstream & Decoding Process Specification, 2019-01-08, The Alliance for Open Media, https://aomediacodec.github.io/av1-spec/av1-spec.pdf
[3] ISO/IEC 13818-1:2023, Information technology - Generic coding of moving pictures and associated audio information, Part 1: Systems, https://www.iso.org/standard/87619.html
[4] ISO/IEC 13818-2:2013 Information technology - Generic coding of moving pictures and associated audio information Part 2: Video
[5] RTP: A Transport Protocol for Real-Time Applications, RFC 3550, https://datatracker.ietf.org/doc/html/rfc3550
[6] Carriage of AV1 in MPEG-2 TS (aomediacodec.github.io), https://aomediacodec.github.io/av1-mpeg2-ts/

## Claims

1. A method of inserting a metadata data structure into a media bitstream, the method comprising:
obtaining the media bitstream;
generating a metadata data structure to be inserted in the media bitstream ;
determining an insertion position in the media bitstream as a position to insert the metadata data structure;
inserting the metadata data structure at the determined position in the media bitstream.

2. The method of claim 1, wherein media bitstream is a bitstream according to a discrete time structure unit of a coding scheme; wherein the metadata data structure is generated to comprise a sequence of bits to differentiate the metadata data structure from data units of the coding scheme.

3. The method of one of claims 1 or 2, further comprising:
generating a payload of the metadata data structure,
wherein inserting the metadata data structure at the determined position in the media bitstream comprises to insert the metadata data structure comprising the payload of the metadata data structure.

4. The method of one of the previous claims, wherein the media bitstream comprises a succession of access units, AUs, or temporal units.

5. The method of one of the previous claims, wherein the metadata data structure is generated according to a Network Abstraction Layer unit, NAL unit, compatible with a target media standard for logical insertion into an access unit, AU, thereof.

6. The method of one of previous claims, wherein the media bitstream is a Network Abstraction Layer unit, NAL unit, based video bitstream.

7. The method of claim 6, wherein the metadata data structure is generated to comprise a header and such that a foremost bit of the header is set to one.

8. The method of claim 7, wherein the header is generated to comprise as the starting first byte a byte corresponding to an unused start code of an MPEG-2 video codec whose first bit is set to one.

9. The method of one of claims 1 to 5, wherein the media bitstream is an Open Bitstream Unit, OBU, based video bitstream.

10. A method of extracting metadata from a first media bitstream, the method comprising:
obtaining the first media bitstream;
parsing a plurality of data units of the media bitstream comprising a metadata data structure;
determining, for each parsed data unit of the plurality of data units, whether the parsed data unit comprises or is a metadata data unit of the metadata data structure or is a data unit having a different data structure according to a media coding scheme of the media bitstream;
removing the parsed metadata data unit from the first media bitstream if the parsed data unit comprises or is a metadata data unit to obtain a second media bitstream.

11. A non-transitory computer-readable storage medium comprising instructions which, when executed by a computer, cause the computer to carry out the method of any one of the preceding claims.

12. An encoding unit, comprising:
an interface obtaining a media bitstream;
a metadata generator for generating a metadata data structure to be inserted in the media bitstream;
a metadata injector for determining an insertion position in the obtained media bitstream as a position to insert the metadata data structure;
wherein the a metadata injector is adapted for inserting the metadata data structure at the determined position in the media bitstream.

13. A decoding unit, comprising:
an interface for obtaining a media bitstream comprising a metadata data structure;
a depacketizer configured for parsing a plurality of data units of the media bitstream;
a metadata extractor configured for determining, for each parsed data unit of the plurality of data units, whether the parsed data unit comprises or is a metadata data unit of the metadata data structure or a data unit having a different data structure according to a media coding scheme of the media bitstream;
wherein the metadata extractor is configured for removing the parsed metadata unit from the first media bitstream if the parsed data unit comprises or is a metadata data unit to obtain a second media bitstream.

14. A data stream comprising a bitstream generated with a method according to one of claims 1 to 9.

15. A non-transitory computer-readable storage medium comprising a media file generated with a method according to one of claims 1 to 9.
